(19) **Europäisches Patentamt / European Patent Office / Office européen des brevets**

(11) **EP 4 592 336 A1**

(12) # EUROPEAN PATENT APPLICATION
published in accordance with Art. 153(4) EPC

(43) Date of publication:
**30.07.2025 Bulletin 2025/31**

(21) Application number: **23868084.7**

(22) Date of filing: **11.09.2023**

(51) International Patent Classification (IPC):
*C08J 5/18* (2006.01)      *B29D 7/01* (2006.01)
*B32B 7/028* (2019.01)      *B32B 27/36* (2006.01)
*C03C 27/12* (2006.01)

(52) Cooperative Patent Classification (CPC):
**B29D 7/01; B32B 7/028; B32B 17/00; B32B 27/36; C08J 5/18**

(86) International application number:
**PCT/JP2023/032980**

(87) International publication number:
**WO 2024/062961 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.09.2022 JP 2022149963**

(71) Applicant: **Toray Industries, Inc.**
**Tokyo 103-8666 (JP)**

(72) Inventors:
• **SAWAMOTO, Keiko**
  **Otsu-shi, Shiga 520-8558 (JP)**
• **MASUDA, Yoshihiro**
  **Otsu-shi, Shiga 520-8558 (JP)**
• **UTO, Takayuki**
  **Otsu-shi, Shiga 520-8558 (JP)**
• **KAWATA, Yuji**
  **Nagoya-shi, Aichi 455-8502 (JP)**

(74) Representative: **Mewburn Ellis LLP**
**Aurora Building**
**Counterslip**
**Bristol BS1 6BX (GB)**

(54) **FILM AND METHOD FOR PRODUCING SAME, LAMINATED STRUCTURE, LAMINATED GLASS, AND AUTOMOBILE**

(57)     The present invention addresses the problem of providing a film that is highly suitable for processes for laminating functional layers involving heating and is capable of suppressing uneven warping resulting from heat press molding for obtaining laminated glass including an intermediate layer and a support body. The present invention provides a film that has at least one thermoplastic resin layer and is characterized in that when the rate of shrinkage at a temperature of T°C in a heat shrinkage curve is represented by S(T)% and a direction in which S(150) is the largest among one discretionary direction and directions reached by rotating by intervals of 5 ° to 180 °C in an in-plane direction parallel to the film surface from said one discretionary direction in a plane parallel to the film surface is designated as an X direction, $0.50 \leq |S(150) - S(100)|$ and $0.00 \leq |S(120) - S(100)| \leq 0.40$ are satisfied in the X direction.

**EP 4 592 336 A1**

**Description**

TECHNICAL FIELD

The present invention relates to a film that can be used suitably for manufacturing laminated glass and the like and a production method therefor, as well as a laminated structure body, laminated glass, and automobile that incorporate the film.

BACKGROUND ART

There are many products that require good aesthetic properties in their exterior parts, such as mobile phones, personal computer housings, electrical appliances, furniture, and automobiles, and in recent years, demands for improved aesthetic properties in these products have been increasing. Examples of methods for imparting good aesthetic properties to these products include applying good painting, printing, etc., attaching colored films, and transferring printed designs from film surfaces onto bases. For these products, furthermore, demands for functionalities of these exterior parts have also been increasing in addition to demands for good aesthetic properties, and for example, there are known methods that can serve to impart good functions such as heat ray absorbability, gas barrier properties, adhesiveness, and electrical conductivity to bases of exterior parts through heating steps.

In recent years, attention has been drawn particularly to heat ray cutting glass that can reduce the inflow of external heat in the summer, heat of sunlight in particular, to meet regulations for emission of carbon dioxide for environmental protection, and efforts have been made for applying such glass to vehicles such as automobiles and electric trains, and window panes of buildings. Some good examples of such heat ray cutting glass include one that has a base having a heat ray absorbing material-containing layer incorporated in laminated glass using an interlayer to serve for blocking heat rays and another one that has a base containing a metal film formed by sputtering etc. that is incorporated in laminated glass using an interlayer to serve for reflecting and blocking heat rays.

Since such heat ray cutting glass is typically used in publicly visible locations, its appearance is an important factor. Furthermore, because it is necessary to process the base, such as a film, by laminating a functional layer, performing sputtering, and the like before incorporating it into heat ray cutting glass, the film base etc. is also required to have suitability for these processing steps. For example, in forming laminated glass that includes a base such as a film, there is a known problem of uneven surface distortions that can occur in the film during shaping due to uneven pressing caused by thickness irregularities of the interlayer used for lamination with the support glass plate or due to differences in thermal shrinkage stress between the glass and the interlayer, which leads to deterioration in the external appearance of the finished product. For example, a known factor in this problem is the difference in thermal shrinkage rate between the interlayer and the film under the processing conditions used, and the implementation of proper control of the thermal shrinkage rate has been proposed as a solution (for example, Patent documents 1 and 2).

PRIOR ART DOCUMENTS

PATENT DOCUMENTS

Patent document 1: International Publication WO 2013/137288
Patent document 2: Japanese Unexamined Patent Publication (Kokai) No. 2012-30563

SUMMARY OF INVENTION

PROBLEMS TO BE SOLVED BY THE INVENTION

However, the proposals described in Patent documents 1 and 2 are specialized in suppressing surface unevenness (improving external appearance) after the formation of laminated glass and cannot serve for improving the suitability of the base, such as film, for heating and other processing steps that are carried out prior to the lamination of glass. The main objective of the present invention is to provide a film that has high suitability for processing steps involving the lamination of functional layers under heating and serves to prevent uneven distortions from being caused during heating and pressure molding involved in the production of laminated glass that contains an interlayer and a support body.

MEANS OF SOLVING THE PROBLEMS

In the production of laminated glass, a support body (glass), interlayer, and film are laminated first and then heat and pressure are applied to them to enhance the adhesion between the members. During the implementation of this step, uneven deformation of the film surface are caused by thickness variations in the interlayer or differences in thermal shrinkage stress between the interlayer and the film and it can result in light scattering, irregular reflection, etc. which possibly lead to degradation in the external appearance of the laminated glass. Since the support plate undergoes little deformation in this step, the shape of the interlayer is not affected by the support plate. Therefore, if the film in use is little prone to suffer surface deformation, it will serve to solve the problem of poor appearance in laminated glass. Furthermore, in the case where a film (laminated structure body) prepared through a step in which functional layers are stacked under heating is used for producing laminated glass through the lamination of a support body, interlayer, and the film, it is important to properly control the thermal shrinkage stress in the laminated structure body or the film present therein.

The present inventors arrived at this invention after finding that defective appearance that occurs in laminated glass produced by heating and pressure molding of a support body, an interlayer, and a film are attributed mainly to uneven deformation of the film and making investigations aiming to develop a solution for eliminating such uneven deformation.

To solve the problem described above, the present invention has the following configuration.

(1) A film comprising at least one thermoplastic resin layer and satisfying the following relations in the X-direction:

$$0.50 \leq |S(150) - S(100)|$$

and

$$0.00 \leq |S(120) - S(100)| \leq 0.40$$

wherein $S(T)\%$ shows the shrinkage rate at a temperature of $T°C$ on a thermal shrinkage curve, and the X direction being determined by first measuring the $S(150)$ value in a randomly selected direction, then performing the measurement at other directions away from the initial direction in 5° increments up to 180° in a plane parallel to the film plane, and identifying the direction with the largest $S(150)$ value as the X direction.

(2) A film as set forth in paragraph (1), wherein the shrinkage onset temperature on the thermal shrinkage curve measured in the X direction is 110°C or more and 170°C or less.

(3) A film as set forth in either paragraph (1) or (2), wherein the average shrinkage rate between 100°C and 120°C on the thermal shrinkage curve measured in the X direction is - 0.40% or more and 0.50% or less and the absolute value of the average rate of change of the shrinkage rate between 120°C and 150°C is 0.04%/°C or more.

(4) A film as set forth in any one of paragraphs (1) to (3), having a structure in which 51 or more layers of thermoplastic resin layers are stacked.

(5) A film as set forth in any one of paragraphs (1) to (4), including an A1 layer and a B1 layer wherein the A1 layer and the B1 layer are two different types of thermoplastic resin layers having different primary components.

(6) A film as set forth in any one of paragraphs (1) to (4), including three types of thermoplastic resin layers having different primary components, each designated as the A2 layer, the B2 layer, and the C2 layer, respectively, wherein these A2 layers, B2 layers, and C2 layers are stacked in a regular manner.

(7) A film as set forth in any one of paragraphs (1) to (6), wherein at least one of the thermoplastic resin layers is a polyester resin layer.

(8) A method for producing a film as set forth in any one of paragraphs (1) to (7), including an off-annealing step in which a sheet that satisfies the relation of $0.50 \leq |S(150) - S(100)|$ is subjected to heat treatment at a temperature of 110°C or more and less than 140°C.

(9) A method for producing a film as set forth in paragraph (8), wherein the sheet satisfies the relation of $0.40 < |S(120) - S(100)|$.

(10) A laminated structure body including a film as set forth in any one of paragraphs (1) to (7) and a functional layer laid on at least one side thereof.

(11) A laminated structure body as set forth in paragraph (10), wherein the functional layer is an electrically conductive layer.

(12) A laminated structure body as set forth in either paragraph (10) or (11), including a plurality of functional layers at least one of which is a second film having an absolute value of shrinkage rate of 0.20% or less at 120°C.

(13) A laminated structure body as set forth in paragraph (12), wherein the film and the second film are attached to each other in such a manner that the relation of $|θb - θf| \leq 30°$ is satisfied where $θb$ is the orientation angle of the film while $θf$ is the orientation angle of the second film.

(14) A laminated structure body as set forth in any one of paragraphs (10) to (13), including functional layers on both sides wherein one of the functional layers is an electrically conductive layer while the other functional layer is the second film having an absolute value of shrinkage rate of 0.20% or less at 120°C.

(15) A laminated structure body as set forth in any one of paragraphs (10) to (14), wherein a reflection profile measured at least from one side includes at least one reflection band in which a reflectance of 30% or more continues over a wavelength range of 20 nm or more.

(16) A laminated structure body as set forth in paragraph (15), wherein the reflection band exists in the wavelength range of 850 nm to 1,200 nm.

(17) A laminated structure body as set forth in any one of paragraphs (10) to (16), wherein the visible light transmittance is 70% or more.

(18) A method for producing a laminated structure body as set forth in any one of paragraphs (11) to (17), including a step for conducting heat treatment at a temperature of 100°C or more and less than 130°C in producing the electrically conductive layer.

(19) Laminated glass including a glass layer 1, an interlayer 2, a laminated structure body as set forth in any one of paragraphs (11) to (17), an interlayer 2, and a glass layer 2 disposed in this order.

(20) Laminated glass as set forth in paragraph (19), wherein the glass layer 1 is positioned on the side where sunlight enters and the electrically conductive layer of the laminated structure body faces the interlayer 1.

(21) An automobile including laminated glass as set forth in paragraph (19) and performing an optical or thermal function when electricity is supplied to the electrically conductive layer of the laminated glass.

ADVANTAGEOUS EFFECTS OF THE INVENTION

The present invention provides a film having a high processability both before and after processing into laminated glass etc., and the use of the film according to the present invention makes it possible to produce laminated glass having superior external appearance and aesthetic properties.

DESCRIPTION OF PREFERRED EMBODIMENTS

The present invention will be illustrated in detail below, but the invention should not be construed as being limited to the following specific embodiments including the examples given below, and furthermore, any other modified embodiments are also regarded as being included in the scope of the present invention as long as they meet an object of the present invention and unless they depart from the spirit of the present invention.

The film according to the present invention is required to satisfy the following relations:

$$0.50 \leq |S(150) - S(100)|$$

and

$$0.00 \leq |S(120) - S(100)| \leq 0.40$$

wherein $S(T)\%$ shows the shrinkage rate at a temperature of $T°C$ on a thermal shrinkage curve determined in the X direction, the X direction being determined by first measuring the $S(150)$ value in a randomly selected direction in a plane parallel to the film plane, then performing the measurement at other directions away from the initial direction in 5° increments up to 180°, and identifying the direction with the largest $S(150)$ value as the X direction. Here, a thermoplastic resin layer refers to a layer that contains thermoplastic resin as the primarily component, and more specifically, it is a layer in which the thermoplastic resin components altogether account for more than 50 mass% and 100 mass% or less of the total mass, which accounts for 100 mass%, of the layer.

Typical thermoplastic resins that can be used to form the thermoplastic resin layer in the film according to the present invention are listed below, although the thermoplastic resins to use for the present invention are not limited thereto. Resins that can be used to form the thermoplastic resin layers in the film according to the present invention include, for example, polyolefin resins such as polyethylene, polypropylene, poly(1-butene), poly(4-methyl pentene), polyisobutylene, polyisoprene, polybutadiene, polyvinyl cyclohexane, polystyrene, poly($\alpha$-methyl styrene), poly(p-methyl styrene), polynorbornene, and polycyclopentene; polyamide resins such as nylon 6, nylon 11, nylon 12, and nylon 66; copolymer resins of vinyl monomers such as ethylene/propylene copolymer, ethylene/vinyl cyclohexane copolymer, ethylene/vinyl cyclohexene copolymer, ethylene/alkylacrylate copolymer, ethylene/acrylic methacrylate copolymer, ethylene/norbornene copolymer, ethylene/vinyl acetate copolymer, propylene/butadiene copolymer, isobutylene/isoprene copolymer, and vinyl chloride/vinyl acetate copolymer; acrylic resins such as polyacrylate, polyisobutyl methacrylate, polymethacrylate, polymethyl methacrylate, polybutyl acrylate, polyacrylamide, and polyacrylonitrile; polyester resins such as polyethylene terephthalate, polypropylene terephthalate, polybutylene terephthalate, and polyethylene-2,6-naphthalate; biodegradable polymers such as polylactic acid and polybutyl succinate; and others such as polyvinyl chloride, polyvinylidene chloride, polyvinyl alcohol, polyvinyl butyral, polyacetal, polyglycolic acid, polycarbonate, polyketone, polyether sulfone, polyether ether ketone, modified polyphenylene ether, polyphenylene sulfide, polyetherimide, polyimide, polysiloxane, tetrafluoroethylene resin, trifluoroethylene resin, trifluorochloroethylene resin, tetrafluoroethylene-hexafluoropropylene copolymer, and poly(vinylidene fluoride).

In each thermoplastic resin layer, these thermoplastic resins can be used alone or as a blend or an alloy of two or more thermoplastic resins. Blending or alloying them serves to develop physical and/or chemical properties that cannot be achieved with a single type of thermoplastic resin, and in addition, in the case where thermoplastic resin layers having significantly different skeleton structures are stacked, interlaminar adhesion at the interface between adjacent thermoplastic resin layers can be improved if either of the thermoplastic resin layers is configured to have a copolymer component in common with the polymer skeleton structure present in the other thermoplastic resin layer.

In regard to the thermoplastic resin layers present in the film according to the present invention, in particular, from the perspective of rheological properties that affect the strength, heat resistance, transparency, or lamination, it is preferable that thermoplastic resins selected from the group of polyolefin resin, polyester resin, acrylic resin, polycarbonate resin, and polyamide resin are to be adopted for forming the thermoplastic resin layers. Specially, from the above perspective, it is more preferable to use polyester resins, and it is still more preferable that at least one of the thermoplastic resin layers is a polyester resin layer. It is still more preferable to use a polyester resin that is produced by polymerization of a monomer that contains aromatic dicarboxylic acid or aliphatic dicarboxylic acid and a monomer that contains a diol as primary constituent components.

Here, useful aromatic dicarboxylic acids include, for example, terephthalic acid, isophthalic acid, phthalic acid, 1,4-naphthalene dicarboxylic acid, 1,5-naphthalene dicarboxylic acid, 2,6-naphthalene dicarboxylic acid, 4,4'-diphenyl dicarboxylic acid, 4,4'-diphenyl ether dicarboxylic acid, and 4,4'-diphenylsulfone dicarboxylic acid. Useful aliphatic dicarboxylic acids include, for example, adipic acid, suberic acid, sebacic acid, dimer acid, dodecanedioic acid, cyclohexane dicarboxylic acid, and ester derivatives thereof. Of these, particularly preferable ones include terephthalic acid and 2,6-naphthalene dicarboxylic acid. Here, these acid components may be used singly or two or more thereof may be used in combination, and they may be partly copolymerized with an oxyacid such as hydroxybenzoic acid.

On the other hand, useful diol components include, for example, ethylene glycol, 1,2-propanediol, 1,3-propanediol, neopentyl glycol, 1,3-butanediol, 1,4-butanediol, 1,5-pentanediol, 1,6-hexanediol, 1,2-cyclohexane dimethanol, 1,3-cyclohexane dimethanol, 1,4-cyclohexane dimethanol, diethylene glycol, triethylene glycol, polyalkylene glycol, 2,2-bis(4-hydroxyethoxyphenyl) propane, isosorbate, and spiroglycol. In particular, the use of ethylene glycol is preferable. These diol components may be used singly or two or more thereof may be used in combination.

Of the above polyester resins, preferable ones to use as thermoplastic resins for the production of the film according to the present invention include those polyester resins selected from polyethylene terephthalate and copolymers thereof, polyethylene naphthalate and copolymers thereof, polybutylene terephthalate and copolymers thereof, polybutylene naphthalate and copolymers thereof, polyhexamethylene terephthalate and copolymers thereof, and polyhexamethylene naphthalate and copolymers thereof.

It is preferable that the film according to the present invention has a structure in which 51 or more thermoplastic resin layers are stacked. If multiple thermoplastic resin layers are stacked, it serves to produce a film that has a function that cannot be realized by a single layer of thermoplastic resin. In regard to functions for light reflection etc., for example, such functions can be enhanced by increasing the number of layers based on the principle of interference reflection. From this perspective, the number of thermoplastic resin layers is more preferably 401 or more. An increase in the number of layers serves to improve the interference functionality attributable to the stack of layers, leading to, for example, enhanced heat ray cutting capability. From the viewpoint of equipment size limitations, the upper limit is about 5,001 layers. Hereinafter, a "laminated film" is supposed to have a structure in which 51 or more thermoplastic resin layers are stacked.

As the film according to the present invention is a laminated film as described above, it becomes easier to allow it to have the function of selectively reflecting light beams in a specific wavelength band through interference reflection on the basis of a particular relationship between refractive index differences between layers and layer thicknesses or the function of reflecting light beams that are polarized in a specific way. In the case of a laminated film having the function of reflecting infrared light, for example, it will be possible to produce laminated glass with high heat shielding capability by interposing this laminated film between two sheets of glass. Alternatively, in the case of a laminated film having the function of reflecting light beams that are polarized in a specific way, a glass member suitable for a display device that shows images using light beams polarized in a specific way can be produced by interposing this laminated film between two sheets of glass.

It is preferable that the film according to the present invention includes an A1 layer and a B1 layer wherein the A1 layer and the B1 layer are two different types of thermoplastic resin layers having different primary components. Furthermore, it is also preferable for the film according to the present invention to include three types of thermoplastic resin layers having different primary components, each designated as the A2 layer, the B2 layer, and the C2 layer, respectively, wherein these A2 layers, B2 layers, and C2 layers are stacked in a regular manner.

For the film according to the present invention, the term "primary component" refers to the component that accounts for more than 50 mass% and 100 mass% or less in the layer. Apart from the primary components, the film may contain secondary components which are, for example, inorganic components or low molecular weight organic components other than thermoplastic resins, such as light absorbers (ultraviolet light absorbers, dyes, pigments, heat absorbers), antioxidants, light stabilizers, anti-glare agents, heat resistant stabilizers, weather resistant stabilizers, organic lubricants, fillers, antistatic agents, nucleating agents, and flame retardants. Any of these secondary components may be added as required to each layer as long as it does not impair the inherent physical properties and functions of the film.

Of these secondary components, ultraviolet light absorbers are preferably adopted with the aim of suppressing photodegradation through competition reactions because, depending on the type of thermoplastic resin present in each thermoplastic resin layer, high energy ultraviolet light can be absorbed to accelerate degradation. In addition, these light absorbers, such as ultraviolet light absorbers, themselves may be affected by degradation caused by heat, oxygen, etc., or photodegradation caused by reactions with ultraviolet light or oxygen that can occur in the resin extrusion step in the film manufacturing process. Therefore, an antioxidant may be added in the former case and a light stabilizer or anti-glare agent may be added in the latter case as additives in layers containing thermoplastic resin components that are likely to suffer degradation as long as they do not impair the inherent physical properties or functions of the film.

For the film according to the present invention, the term "different" used for thermoplastic resin layers means that at least one of the following applies: (1) they have different compositions, (2) they have different glass transition temperatures or melting points as measured by differential scanning calorimetry (DSC), and (3) their cross sections give stained images that differ in contrast when they are observed by transmission electron microscopy (TEM).

The term "different compositions" refers to those compositions that do not meet the requirements for being considered to be "the same composition" defined below. Two thermoplastic resin layers are considered to have "the same composition" if common repeating chemical structural units of thermoplastic resin account for 95 mol% or more and 100 mol% or less in them or if 95 mol% or more and 100 mol% or less of the constituent components are common to both thermoplastic resin layers.

For example, in the former case, a constituent unit composed of an ethylene glycol unit and a terephthalic acid unit bonded to each other by an ester bond (ethylene terephthalate unit) is the primary constituent unit in polyethylene terephthalate. If a layer formed of homopolyethylene terephthalate is combined with a layer formed of polyethylene terephthalate that is 10 mol% copolymerized with isophthalic acid, the resins present in the layers contain the same chemical structure, namely, the ethylene terephthalate skeleton, but the copolymer component accounts for more than 5 mol% and this means that their compositions are different. Similarly, for the latter case, if a layer formed only of homopolyethylene terephthalate is combined with a layer in which homopolyethylene terephthalate accounts for 90 mol% while other components account for the remaining 10 mol%, the layers have the same constituent component as the primary component, but more than 5 mol% is accounted for by other components, which means that they have different compositions. The specific composition or repeating chemical structural units of each thermoplastic resin layer can be determined by first measuring the thickness of each thermoplastic resin layer according to the measurement method described later in the section addressing layer structure determination methods and then preparing a sample by cutting the thermoplastic resin layer or scraping the surface of the layer to expose the component, thereby making it possible to analyze them by means of such techniques as the use of infrared spectroscopic methods (such as FT-IR and nanoIR), gas chromatography-mass spectrometry device (GC-MS), or nuclear magnetic resonance (NMR) spectrometer.

Compared to this, in the case where it is difficult to identify the compositions of thermoplastic resin layers by the above methods after extracting samples separately from each of them, they may be shown to be "different" by revealing that the two thermoplastic resin layers present in the laminated film exhibit different melting points and/or glass transition temperatures as measured by differential scanning calorimetry (DSC). Here, for the present invention, the expression "exhibiting different melting points or glass transition temperatures" means that the measured melting points or glass transition temperatures differ by 0.1°C or more, preferably 2°C or more. In other cases, there may be a thermoplastic resin layer that does not exhibit a melting point or glass transition temperature. In the case where either thermoplastic resin layer exhibits a melting point or a glass transition temperature while the other thermoplastic resin layer does not, they are also considered to be different even though their temperature difference cannot be calculated. Here, for the present invention, measurement by DSC can be conducted by the method specified in JIS-K-7122 (1987) in the measurement temperature range of 25°C or more and 300°C or less.

For the above two methods, the thermoplastic resin layers under examination are required to be separated from the film before subjecting them to analysis, but this separation may be difficult to perform in some cases. For the present invention, therefore, for the sake of convenience, in the case where an interface between two layers that is attributed to a difference in contrast can be identified in a cross-sectional image observed by transmission electron microscopy and in addition, the difference in the average luminance between two adjacent layers is shown to be larger than the standard deviation of the luminance in both thermoplastic resin layers by means of the technique described in the paragraph addressing layer interfaces (difference in contrast) in the undermentioned section for measurement methods, it is considered that the stained images differ in contrast to indicate that the adjacent thermoplastic resin layers have "different" compositions.

The difference in contrast described above is attributed to differences in electron scattering, crystalline diffraction, etc., between the thermoplastic resin layers. Therefore, when the composition of thermoplastic resin layers differs according to the definitions described above, it should be considered that they are different in terms of crystallinity, electron density state, etc., depending on the type of thermoplastic resin present in each thermoplastic resin layer or the degree of copolymerization in the thermoplastic resin layers combined, and these differences also affect the electron staining state. This means that in the case of a laminated film that includes thermoplastic resin layers having different compositions, each thermoplastic resin layer observed in a cross-sectional image of the laminated film can be visually distinguished in a structure containing contrast differences. Here, the presence or absence of contrast differences can be determined using the method described later.

It is preferable that the film according to the present invention includes an A1 layer and a B1 layer wherein the A1 layer and the B1 layer are two different types of thermoplastic resin layers having different primary components. From the perspectives of adhesiveness between layers and easiness of highly accurate formation of a laminated structure body, it is preferable that the above two types of thermoplastic resin layers contain thermoplastic resins having the same basic skeleton. The basic skeleton refers to the repeating unit most commonly found in the molecular chains, such as the ethylene terephthalate unit and the ethylene unit in the case of polyethylene terephthalate and polyethylene, respectively. Here, in the case of such a configuration in which 51 or more thermoplastic resin layers are stacked, it is preferable that A1 layers and B1 layers are stacked alternately.

In regard to preferable combination of thermoplastic resins to use for the A1 and B1 layers, it is preferable that the thermoplastic resin used as the primary component of the A1 layers and the thermoplastic resin used as the primary component of the B1 layers share the same basic skeleton. If the thermoplastic resins contained as the primary components in these layers have the same basic skeleton, it serves to ensure highly accurate lamination and prevent delamination from occurring easily at the interface between the layers.

To prepare thermoplastic resins that contain the same basic skeleton but have different properties, it is preferable that either of them is a copolymeric resin or that both are copolymeric resins though differing in the type of copolymerization unit or in the copolymerization rate. An example for the former case is a configuration in which homopolyethylene terephthalate is adopted as either of the thermoplastic resins whereas a resin composed mainly of the ethylene terephthalate unit and a repeating unit having a different ester bond is used as the other thermoplastic resin. The proportion of such a different repeating unit (occasionally referred to as copolymerization rate) is preferably 5 mol% or more to develop different characteristics and, on the other hand, it is preferably less than 50 mol% because it can serve to achieve desirable interlaminar adhesion and ensure high thickness accuracy and thickness uniformity of each layer due to a small difference in thermal flow characteristics. It is more preferably 10 mol% or more and 45 mol% or less. On the other hand, as an example for the latter case, both layers are formed of thermoplastic resin composed mainly of the ethylene terephthalate unit and a repeating unit having a different ester bond, but they differ in copolymerization rate. It is also preferable that both the A1 layer and the B1 layer consist mainly of a blend or an alloy of multiple types of thermoplastic resins. Blending or alloying multiple types of thermoplastic resins can develop properties that cannot be achieved with a single type of thermoplastic resin.

Furthermore, for the thermoplastic resins used as the primary components of the A1 layer and the B1 layer in the film according to the present invention, it is preferable that the difference between the glass transition temperatures of the thermoplastic resins used in combination is 20°C or less. When the difference between their glass transition temperatures is 20°C or less, it serves to ensure a higher thickness uniformity in the laminated film production process and leads to a higher uniformity of reflection properties. In addition, it can ensure a reduced occurrence of overstretching during the shaping of a film.

In the case where the film according to the present invention has a layered structure in which A1 layers and B1 layers are stacked alternately, with a A1 layer positioned as the outermost layer on both sides and has the feature that the difference in glass transition temperature between the thermoplastic resin used as the primary component of the A1 layers (thermoplastic resin A1) and the thermoplastic resin used as the primary component of the B1 layers (thermoplastic resin B1) is more than 5°C, it is more preferable that the glass transition temperature of the thermoplastic resin A1 is higher than the glass transition temperature of the thermoplastic resin B1. Then, the A1 layer disposed as the outermost layer has a relatively high glass transition temperature, and it serves to reduce the adhesion onto the rolls and clips during the longitudinal stretching and transverse stretching steps, thereby suppressing degradation in external appearance quality.

For the film according to the present invention, it is preferable that the difference in the in-plane average refractive index between the A1 layers and the B1 layers is 0.03 or more. It is more preferably 0.05 or more, and still more preferably 0.10 or more. If the difference in the in-plane average refractive index between the A layers and the B layers is 0.03 or more, it serves to achieve a sufficient reflectivity, thereby ensuring, for example, an enhanced heat ray cutting capability. To allow the difference in the in-plane average refractive index between the A1 layers and the B1 layers to be in the above range, a good method is to adopt a configuration in which either the resin A1 or the resin B is crystalline while the other is amorphous. The term "being crystalline" as used herein means that the resin has a melting enthalpy of 10 J/g or more as measured by differential scanning calorimetry (DSC). On the other hand, the term "being amorphous" means that the resin has a melting enthalpy of less than 10 J/g. If such a combination of resins is adopted, a difference in in-plane refractive index can be easily developed in the stretching and heat treatment steps in the film production process. Here, in general, amorphous resins tend to suffer little change in refractive index in the stretching or heat treatment step in the film production process, and therefore, the refractive index of such a resin can be determined from a sheet-like specimen prepared by pressing it, after vacuum-drying it if necessary. It should be noted that the in-plane refractive index means the average of the refractive index measured in the X direction and that measured in the Y direction (described later) (the method for identifying the directions and a method for measuring the refractive index will be described later).

For the film according to the present invention, an example of a favorable resin combination that satisfies the above requirements is one in which the A1 layer contains polyethylene terephthalate or polyethylene naphthalate as the primary component whereas the B1 layer contains, as the primary component, a polyester that has the same basic skeleton as the A1 layer and includes spiroglycol. Such a polyester that includes spiroglycol is either a copolyester formed through copolymerization with spiroglycol or a polyester blend containing a copolyester formed through copolymerization of homopolyester and spiroglycol. The use of a polyester that includes spiroglycol is preferable because its difference in glass transition temperature from polyethylene terephthalate and polyethylene naphthalate is small and therefore, it tends to be resistant to overstretching during shaping and hardly suffer interlaminar peeling. From the above point of view, it is more preferable to adopt a configuration in which the A1 layer contains either polyethylene terephthalate or polyethylene naphthalate as the primary component whereas the B1 layer contains, as the primary component, a polyester that has the same basic skeleton as the A1 layer and includes spiroglycol and cyclohexanedicarboxylic acid. If the B1 layer contains, as the primary component, a polyester that includes spiroglycol and cyclohexanedicarboxylic acid, it differs largely in in-plane refractive index from polyethylene terephthalate and polyethylene naphthalate and accordingly, a higher reflectance can be achieved by stacking multiple A1 layers and B1 layers alternately. Furthermore, such a polyester has a small difference in glass transition temperature from polyethylene terephthalate and polyethylene naphthalate and also has high adhesiveness. Accordingly, it is resistant to overstretching during shaping of the film and serves to reduce the interlaminar peeling between A1 layers and B1 layers.

In regard to the copolymerization rate of a polyester that contains spiroglycol and cyclohexanedicarboxylic acid, the copolymerization rate for spiroglycol is preferably 5 mol% to 30 mol% and the copolymerization rate for cyclohexanedicarboxylic acid is preferably 5 mol% to 30 mol%. For a polyester containing spiroglycol, it is preferable that the copolymerization rate is 5 mol% or more and less than 50 mol%.

In addition, in the case where the film according to the present invention has a layered structure in which A1 layers and B1 layers are stacked alternately, with an A1 layer positioned as the outermost layer on both sides, it is also preferable that the A1 layers contain crystalline polyester as the primary component while the A2 layers contain amorphous polyester as the primary component. If such a structure is adopted, it serves not only to facilitate the development of a difference in in-plane refractive index during the stretching and heat treatment steps in the film production process as described above but also to ensure orientation relaxation when performing heat treatment at a temperature that is largely higher than the glass transition temperature of the amorphous polyester and not higher than the melting point of the crystalline polyester.

In addition, other preferable configurations include one in which the A1 layer contains a small amount of the resin that is the primary component of the B1 layer, one in which the B1 layer contains a small amount of the resin that is the primary component of the A1 layer, and one in which the above two configurations are combined. As described above, if either or both of the A1 layer and the B1 layer each contain small amounts of the other's primary component, it serves to improve the lamination accuracy, interlaminar adhesion, and stretchability during film production. In regard to the mixing ratio, it is preferable for these components to account for 5 mass% to 30 mass% relative to the total mass, which accounts for 100 mass%, of each layer.

Furthermore, it is also preferable for the film according to the present invention to include three types of thermoplastic resin layers having different primary components, each designated as the A2 layer, the B2 layer, and the C2 layer, respectively, wherein these A2 layers, B2 layers, and C2 layers are stacked in a regular manner. Here, the term "being stacked in a regular manner" refers to a laminated structure in which the three types of thermoplastic resin layers, which are "different" according to the aforementioned definition, are disposed in a specific order. In this case, the three different thermoplastic resin layers may each be a thermoplastic resin layer formed of a thermoplastic resin having a skeleton structure that is different from the others. Alternatively, the three different thermoplastic resin layers may each include a thermoplastic resin having two types of skeleton structures and differ in terms of their mixing ratio or copolymerization rate. For convenience, hereinafter in this document, different thermoplastic resin layers are designated as the A2 layer, B2 layer, and C2 layer in alphabetical order starting from the outermost surface of the film, and the thermoplastic resins contained in them as the primary components are referred to as the thermoplastic resin A2, thermoplastic resin B2, and thermoplastic resin C2, respectively.

If different thermoplastic resin layers are designated as the A2 layer, B2 layer, and C2 layer in the order in which they appear from the outermost surface of the laminated film, examples of regular sequences for the layers in the film according to the present invention include (ABC)x, (ABCB)x, (ABAC)x, (ABCAB)x, (ABCAC)x, (ABABC)x, and (ABCBCB)x (the letters in parentheses indicate regular sequence patterns, with x denoting a natural number that represents the number of repetitions; the letters A, B, and C show the A2 layer, B2 layer, and C2 layer, respectively; and hereinafter, the same notation will be used occasionally in explanations of regular sequences of multiple A2, B2, and C2 layers.) In particular, to allow a film containing thermoplastic resins having different physical and/or chemical properties such as skeleton structures and viscoelasticity and viscosity characteristics to maintain a laminated structure and keep required functions over a long period without suffering interfacial delamination, it is necessary to make a careful examination of thermoplastic resin layers disposed adjacently to each other to form thermoplastic resin layer interfaces in the film in order to ensure that highly compatible thermoplastic resin layers (in terms of miscibility, surface free energy, etc.) can be combined properly.

Thus, to develop a simple overall resin design for the film, it is preferable to minimize the number of different types of interfaces formed between thermoplastic resin layers disposed adjacently to each other. Specifically, three different thermoplastic resin layers can form three types of interfaces, that is, the A2-B2 interface, the B2-C2 interface, and the C2-A2 interface. Among the regularly arranged sequences listed above, (ABCB)x and (ABCBCB)x are preferable because they have only two types of interfaces, that is, the A2-B2 interface and the B2-C2 interface. For such configurations, resin layer design is only required to prevent delamination between A2 and B2 layers and between B2 and C2 layers while little attention is required to be paid to the combination of A2 and C2 layers.

The film according to the present invention is required to satisfy the following relations:

$$0.50 \leq |S(150) - S(100)|$$

and

$$0.00 \leq |S(120) - S(100)| \leq 0.40$$

wherein S(T)% shows the shrinkage rate at a temperature of T°C on a thermal shrinkage curve determined in the X direction, the X direction being determined by first measuring the S(150) value in a randomly selected direction in a plane parallel to the film plane, then performing the measurement at other directions away from the initial direction in 5° increments up to 180°, and identifying the direction with the largest S(150) value as the X direction. Here, the thermal shrinkage curve is determined by thermomechanical analysis that is performed under the conditions of a measuring temperature of 25°C to 200°C and a heating rate of 10°C/min. The length at 25°C is used as reference and measurements are recorded as positive values to indicate shrinkage or negative values to indicate expansion. It is more preferable that the film satisfies both the relations of $0.50 \leq |S(150) - S(100)| \leq 2.60$ and $0.00 \leq |S(120) - S(100)| \leq 0.30$, more preferably satisfies the relations of $1.00 \leq |S(150) - S(100)| \leq 2.60$ and $0.00 \leq |S(120) - S(100)| \leq 0.20$, and particularly preferably satisfies the relations of $1.00 \leq |S(150) - S(100)| \leq 2.60$ and $0.00 \leq |S(120) - S(100)| \leq 0.19$.

If the relation of $0.50 \leq |S(150) - S(100)|$ is satisfied in the X direction of the film, it serves to prevent uneven pressing from being caused by uneven thickness in the interlayer in producing a shaped article such as laminated glass and suppress deformation of the surface profile of the film due to differences in thermal shrinkage stress between the interlayer and the film, thereby leading to laminated glass having an improved external appearance. Furthermore, if the relation of $0.00 \leq |S(120) - S(100)| \leq 0.40$ is satisfied in the X direction of the film, it serves to ensure that the film shaping step can be performed efficiently and favorably without suffering deformation of the film or curling etc. attributable to shrinkage differences between resin layers and functional layers while carrying out a heating step during the lamination of functional layers on the film. In addition, when the Y direction, which is rotated by 90° from the X direction in parallel with the film plane, it is preferable that the ratio between the shrinkage rate in the X direction and that in the Y direction is 0.5 or more and 2.0 or less. If there is a poor balance between the shrinkage rate in the X direction and that in the Y direction, it may lead to wrinkles during processing, but a better balance can serve to produce laminated glass with fewer wrinkles.

It is preferable for the film according to the present invention to show a thermal shrinkage onset temperature at 110°C or more and 170°C or less on the thermal shrinkage curve measured in the X direction. Here, the thermal shrinkage onset temperature on a thermal shrinkage curve is defined as the temperature at which the shrinkage rate exceeds 0%, as compared to the measurement at 25°C which is adopted as reference, on the thermal shrinkage curve observed under the conditions of a temperature of 25°C to 200°C and a heating rate of 10°C/min. If the thermal shrinkage onset temperature is 110°C or more, it allows the deformation of the film and the curling etc. attributable to shrinkage differences between the film and functional layers to be reduced in the heating step during the lamination of functional layers on the film. On the other hand, if the thermal shrinkage onset temperature is 170°C or less, it serves to prevent uneven pressing from being caused by uneven thickness in the interlayer in producing a shaped article such as laminated glass and suppress deformation of the surface profile of the film due to differences in thermal shrinkage stress between the interlayer and the film. In view of the description given above, the thermal shrinkage onset temperature on the thermal shrinkage curve observed in the X direction is more preferably 110°C or more and 150°C or less and still more preferably 110°C or more and less than 140°C.

For the film according to the present invention, the average shrinkage rate between 100°C and 120°C on the thermal shrinkage curve observed in the X direction is preferably -0.40% or more and 0.50% or less, and the absolute value of the average rate of change in the shrinkage rate between 120°C and 150°C is preferably 0.04%/°C or more. Here, "the average shrinkage rate between 100°C and 120°C on the thermal shrinkage curve" means the average of all measurements on the thermal shrinkage curve observed between 100°C and 120°C whereas "the absolute value of the average rate of change in the shrinkage rate between 120°C and 150°C" is the absolute value of the quotient of the difference between $S(150)$ and $S(120)$ divided by the temperature difference between 120°C and 150°C, i.e., 30°C. A film configured in this way suffers little curling etc. attributable to shrinkage differences between the film and functional layers while carrying out a heating step during the lamination of functional layers on the film and undergoes little surface profile deformation in the film during subsequent processing for producing a shaped article such as laminated glass.

Specific examples of methods to produce the film according to the present invention characterized by having the relations of $0.50 \leq |S(150) - S(100)|$ and $0.00 \leq |S(120) - S(100)| \leq 0.40$ in the X direction described above will be described below, but the invention is not construed as being limited to this method.

A good method to produce the film according to the present invention characterized by satisfying the relations of $0.50 \leq |S(150) - S(100)|$ and $0.00 \leq |S(120) - S(100)| \leq 0.40$ in the X direction described above is to prepare a sheet that satisfies the relation of $0.50 \leq |S(150) - S(100)|$ and subject it to off-annealing treatment at a temperature of 100°C or more and 140°C or less, preferably 110°C or more and less than 140°C, and still more preferably 125°C or more and less than 140°C. In this step, it is preferable to use a sheet that satisfies the relation of $1.00 \leq |S(150) - S(100)|$, more preferably $1.50 \leq |S(150) - S(100)|$, and still more preferably $1.50 \leq |S(150) - S(100)| \leq 3.50$. If it satisfies the relation of $|S(150) - S(100)| \leq 3.50$, the sheet undergoes less shrinkage when subjected to off-annealing treatment, thereby leading to a reduction in the occurrence of scratches etc.

Furthermore, it is preferable for the sheet to satisfy the relation of $0.40 < |S(120) - S(100)|$. A method to produce such a sheet will be described later, but if the sheet satisfies the relation of $0.40 < |S(120) - S(100)|$, it makes it easy to satisfy the relation of $0.50 \leq |S(150) - S(100)|$ or allow the value of $|S(150) - S(100)|$ to be adjusted in the more preferable range described above. In this step, it is still more preferable to use a sheet that satisfies the relation of $0.45 < |S(120) - S(100)| < 0.85$. If it satisfies the relation of $|S(120) - S(100)| < 0.85$, it undergoes less shrinkage when subjected to off-annealing treatment, thereby leading to a reduction in the occurrence of scratches etc.

A "sheet" as referred to herein may be either an unoriented sheet formed through a melt extrusion step or a casting step or a biaxially oriented sheet produced by subjecting the unoriented sheet to biaxial stretching. Here, biaxial stretching means stretching in both the longitudinal direction and the transverse direction. This stretching may be performed sequentially in the two directions or simultaneously in the two directions. Furthermore, the sheet may be re-stretched in the longitudinal direction and/or in the transverse direction as required. Here, the longitudinal direction refers to the running direction of the sheet or film (or the winding direction if the film is in the form of a roll) while the transverse direction is the direction perpendicular to the longitudinal direction in the plane of the film. For the present invention, in particular, it is preferable to use a biaxially oriented sheet in order to achieve isotropic mechanical properties including thermal shrinkage behavior etc.

Next, a method for producing a biaxially orientated sheet that satisfies the relation of $0.50 \leq |S(150) - S(100)|$ and serves suitably to produce the film according to the present invention will be described below with reference to a sequential biaxial stretching procedure as an example, although the invention is not construed as being limited to the example given below.

First, thermoplastic resins that are to be used to form thermoplastic resin layers of a sheet are prepared in the form of pellets etc. Here, in the case where an amorphous polyester and a crystalline polyester are to be used in the form of an alloy, it is preferable to prepare pellets in advance by kneading them in a twin screw extruder. The dispersion state of the crystalline polyester, furthermore, can be controlled by selecting a twin screw extruder that has appropriate screws and adopting a proper extrusion rate, screw rotation speed, kneading temperature, etc., and it may also be effective to add a compatibilizer such as a polyester elastomer. If pellets are prepared in advance by kneading in a twin screw extruder etc. in this manner, it becomes possible to control the dispersion state and domain size of the crystalline polyester in the amorphous polyester.

Then, the pellets are dried in hot air or in a vacuum as required and then they are supplied to separate extruders. In each extruder, the pellets are heated and melted at or above the melting point or at a temperature of 250°C to 330°C, then sent through a gear pump etc. to achieve a uniform extrusion rate, and passed through a filter etc. to remove foreign objects, modified resin components, etc., from the molten resin. Subsequently, it is extruded into a sheet shape through a die and cooled and solidified on a cooling member, such as a casting drum, to provide an unoriented sheet. In this step, it is preferable that wire type, tape type, needle type, or knife type electrodes, etc., are used to allow the molten sheet-like material to maintain close contact with the cooling member, that is, the casting drum, by means of electrostatic force to quench it to achieve its solidification. Besides, there are other good methods to allow a molten sheet-like material to maintain close contact with a cooling member, including supplying air from a slit type, spot type, or plane type apparatus to bring the molten sheet-like material into close contact with a cooling member and using nip rolls to bring the molten sheet-like material into close contact with a cooling member. In these steps, it is preferable for the casting drum to have a surface temperature of 20°C to 50°C.

Furthermore, when a sheet that include a plurality of thermoplastic resin layers is to be formed, a plurality of different resins are supplied through separate flow channels from two or more extruders and fed into a multilayer lamination apparatus. Useful multilayer lamination apparatuses include multimanifold die, feedblock, and static mixer, but among others, it is preferable to use a feedblock that has at least two or more separate members each having many fine slits in order to ensure efficient production of a film having a preferable layered structure for the present invention. If a feedblock of this type is used, it eliminates the necessity for an extremely large apparatus, accordingly serving to prevent foreign objects from being formed as a result of heat degradation and perform high accuracy lamination even when the stack contains an extremely large number of layers. In addition, the lamination accuracy in the transverse direction can also be improved dramatically in comparison with the conventional techniques, and it facilitates the formation of a structure consisting of layers having desired thicknesses. With the above apparatus, the thickness of each layer can be controlled by adopting appropriate slit shapes (length and width), which makes it easy to allow the layers to have desired thicknesses. In this way, a molten multilayer laminated structure body having an intended layer configuration is formed and introduced into a die to provide an unoriented sheet as described above.

Subsequently, the resulting unoriented sheet is biaxially stretched in the longitudinal and transverse directions. Here, stretching in the longitudinal direction is unidirectional stretching that is performed with the aim of developing molecular orientation in the longitudinal direction in the sheet, and commonly, it is achieved by means of rolls that rotate at different circumferential speeds in a longitudinal stretching machine. This stretching step may be carried out in a single stage or in multiple stages using two or more pairs of rolls. The stretching ratio to use depends on the type of resin but typically, it is preferably 2 to 10. For example, a stretching ratio of 2 to 7 is particularly preferable when using polyethylene terephthalate or polyethylene naphthalate, which are thermoplastic resins suitable to form crystalline thermoplastic resin layers that can serve favorably for producing the film according to the present invention. If the resin is strongly oriented by stretching it excessively in the longitudinal direction, it may undergo neckdown in the transverse direction to make it impossible to achieve a sufficient sheet width, possibly leading to significant thickness variations in the longitudinal direction and/or the transverse direction after the transverse stretching step. In addition, the stretching temperature is preferably set between the glass transition temperature and a temperature higher by 100°C than the glass transition temperature of the thermoplastic resin layer that has the highest glass transition temperature among all thermoplastic resin layers present in the sheet.

The uniaxially stretched sheet is then subjected to a transverse stretching step. Prior to the step, however, it may be subjected to surface treatment such as corona treatment, flame treatment, and plasma treatment as required and then coated with an adhesion improving layer having lubricity, adhesiveness, antistatic property, etc. by means of an in-line coating technique. In the in-line coating step, the adhesion improving layer may be formed on either surface of the laminated film or may be formed on both surfaces of the sheet by simultaneous coating or sequential coating. The term "stretching in the transverse direction" refers to stretching that is intended to develop orientation in the transverse direction of a sheet, and commonly, it is carried out by using a tenter in which the sheet is held at both transverse-directional ends by clips and conveyed while increasing the distance between the opposed clips. The stretching ratio to use depends on the type of resin but typically, it is preferably 2 to 10. For example, a stretching ratio of 2 to 7 is particularly preferable when using polyethylene terephthalate or polyethylene naphthalate, which are thermoplastic resins suitable to form crystalline thermoplastic resin layers that can serve favorably for producing the film according to the present invention. In addition, the stretching temperature is preferably set between the glass transition temperature and a temperature higher by 120°C than the glass transition temperature of the resin component that has the highest glass transition temperature among all resin components present in the sheet.

The sheet biaxially stretched in this way is then heat-treated in a tenter at a temperature not less than the stretching temperature and not more than the melting point of the thermoplastic resin layer that has the highest melting point among all thermoplastic resin layers present in the sheet, preferably at a temperature not less than the stretching temperature and not more than the temperature lower by 30°C than the melting point of the thermoplastic resin layer that has the highest melting point among all thermoplastic resin layers present in the sheet. Afterwards, the sheet is cooled slowly and uniformly to room temperature and wound up. In addition, as required, in order to impart improved thermal dimensional stability, relaxation treatment etc. may also be performed in the longitudinal direction and/or the transverse direction during the period between the heat treatment step and the slow cooling step.

Here, in order to provide a sheet that satisfies the relation of $0.50 \leq |S(150) - S(100)|$ and serves suitably for producing the film according to the present invention, it is preferable to strengthen the orientation in the longitudinal direction by properly adjusting the longitudinal stretching ratio and the longitudinal stretching temperature. For example, in the case of using polyethylene terephthalate (PET) as a thermoplastic resin component, a desired sheet will be produced more easily when adopting a longitudinal stretching temperature of 95°C or less and/or a longitudinal stretching ratio of 3.5 or more. Similarly, it is also preferable to strengthen the orientation in the direction perpendicular to the longitudinal direction (i.e., transverse direction) by properly adjusting the transverse stretching temperature and the transverse stretching ratio. For example, in the case of using PET as a thermoplastic resin component, a desired sheet will be produced more easily when adopting a transverse stretching temperature of 110°C or less and/or a transverse stretching ratio of 3.8 or more. Furthermore, it is desirable to properly adjust the longitudinal stretching conditions and the transverse stretching conditions in order to control the differences in thermal shrinkage behavior between the longitudinal direction and the direction perpendicular thereto. Specifically, the isotropy in thermal shrinkage behavior can be increased if the difference between the longitudinal stretching ratio and the transverse stretching ratio is adjusted to 0.8 or less or if the temperature difference between the longitudinal stretching temperature and the transverse stretching temperature is adjusted to 15°C or more and 50°C or less.

In the method for producing a sheet that is suitable for manufacturing the film according to the present invention, it is preferable that the temperature for the heat treatment step performed after stretching is equal to or less than the melting point of at least one thermoplastic resin component and equal to or more than the melting point of at least one other thermoplastic resin component. In this case, one thermoplastic resin component retains a high degree of orientation while the orientation of the other thermoplastic resin component is relaxed, and therefore, a difference in refractive index can be introduced easily between these thermoplastic resin components and in addition, it becomes possible to impart a higher thermal shrinkage behavior to the thermoplastic resin component that retains a high degree of orientation. In addition, for example, in the case of a film that includes two thermoplastic resin layers (A1 layer and B1 layer) having different primary components, where the A1 layer is made of a crystalline polyester (crystalline polyester A1) and the B1 layer is made of an amorphous polyester and a crystalline polyester that is different from the crystalline polyester A1 (crystalline polyester B1), it is preferable to adopt a heat treatment temperature that is equal to or less than the melting points of the crystalline polyester A1 and the crystalline polyester B1. This acts to retain not only the orientation of the crystalline polyester A1 but also the orientation of the crystalline polyester B1, thereby serving to develop a more preferable thermal shrinkage behavior.

Furthermore, since the relaxation treatment step mentioned above is carried out with the aim of suppressing the thermal shrinkage behavior, it may also be preferable to omit the implementation of the relaxation treatment step in the case of a sheet suitable for producing the film according to the present invention. In order to optimize the degree of relaxation, it is preferable that the effect of the relaxation treatment is equivalent to 0% or more and 5% or less of the width of the sheet before the relaxation treatment step. Depending on the type of thermoplastic resin used, in the case where polyethylene terephthalate is used in combination with an amorphous polyester that completely melts during the heat treatment step, a sheet exhibiting an optimal thermal shrinkage behavior can be obtained when the degree of relaxation is in the range of approximately 0% to 1% relative to the film width before the relaxation treatment step.

Next, the method for producing the film according to the present invention is described below. The method for producing the film according to the present invention includes an off-annealing step in which a sheet that satisfies the relation of $0.50 \leq |S(150) - S(100)|$ is subjected to heat treatment at a temperature of 110°C or more and less than 140°C. It is more preferable to include an off-annealing step in which the sheet satisfies the relation of $0.40 < |S(120) - S(100)|$. Such an off-annealing step that is suitable for the production of the film according to the present invention is described below. The off-annealing step is one in which a wound sheet is subjected to re-heat treatment. Sheets that are obtained by the aforementioned methods and satisfy the relation of $0.50 \leq |S(150) - S(100)|$) often fail to satisfy the relation of $0.00 \leq |S(120) - S(100)| \leq 0.40$, but sheets that satisfy both the relation of $0.50 \leq |S(150) - S(100)|$) and the relation of $0.00 \leq |S(120) - S(100)| \leq 0.40$ can be produced from the above sheets that satisfy the relation of $0.50 \leq |S(150) - S(100)|$ by subjecting them to re-heat treatment at 110°C or more and less than 140°C.

In general, when a rate of shrinkage occurring at a certain temperature is to be reduced, it is effective to conduct re-heat treatment at or above a temperature calculated as [the former temperature - 10°C]. This suggests that, for reducing the value of S(120), that is, the rate of shrinkage effected at 120°C, it is effective to conduct annealing treatment at a temperature of 110°C or more. On the other hand, if annealing treatment is performed at a temperature of 140°C or more, it may cause a decrease in S(150), that is, the rate of shrinkage effected at 150°C and possibly lead to a film that fails to satisfy the relation of $0.50 \leq |S(150) - S(100)|$. However, even when annealing treatment is performed at a temperature of 140°C or more, the resulting film may still satisfy the relation of $0.50 \leq |S(150) - S(100)|$ if the duration of annealing treatment is short (i.e., if the sheet transport speed is high). Similarly, even when annealing treatment is conducted at a temperature of less than 110°C, the resulting film may satisfy the relation of $0.00 \leq |S(120) - S(100)| \leq 0.40$ if the duration of annealing treatment is sufficiently long. However, if there is an excessively large difference between the temperature where shrinkage reduction is desired and the re-heating treatment temperature, it may occasionally lead to difficulty in controlling the flatness, shrinkage rate, etc., of the film, and therefore, the preferable temperature range for heat treatment in the off-annealing step is 110°C or more and less than 140°C.

For the present invention, it was also found that even when the aforementioned sheets satisfy the relation of $0.40 < |S(120) - S(100)|$, the implementation of re-heat treatment at a temperature of 110°C or more and less than 140°C can serve to decrease the S(120) value while maintaining a high S(150) value, that is, to produce a film that satisfies both relations of 0.50 ≤ IS(150) - S(100)|) and 0.00 ≤ IS(120) - S(100)| ≤ 0.40).

In the case where the transverse direction coincides with the X direction, furthermore, the implementation of the off-annealing step with the film free in the transverse direction (that is, without constraining the sheet in the transverse direction) makes it easier to achieve a shrinkage rate in the aforementioned range in the transverse direction. When the longitudinal direction coincides with the X direction, a decrease in the winding speed in the longitudinal direction by 0.5% to 5% compared to the unwinding speed can make it easier to achieve a shrinkage rate in the aforementioned range in the longitudinal direction. In addition, if a step-like cooling zone is provided after the heat treatment step, it can make it possible to control the shrinkage rate.

The film according to the present invention is particularly suitable for use in laminated glass that includes an interlayer and a support body that is constructed after undergoing a step in which functional layers are added while applying heat. It means that a laminated structure body can be produced by laying a functional layer on at least one side of the film according to the present invention. Here, the term "functional layer" refers to one that has a function not inherent in the film according to the present invention, and examples thereof include adhesion improving layers, hard coat layers, abrasion resistant layers, scratch resistant layers, anti-reflective layers, color correction layers, ultraviolet light absorbing layers, heat absorbing layers, printed layers, gas barrier layers, adhesive layers, electrically conductive layers, and protective layers.

When forming a laminated structure body by laying a functional layer on the film according to the present invention, its production process may include steps for coating the film with a coating liquid that acts as precursor for the desired functional layer and subsequent heating at a temperature of 100°C or more and less than 130°C for removing the solvent or curing the layer. If the film does not satisfy the relation of 0.00 ≤ |S(120) - S(100)| ≤ 0.40 (that is, if |S(120) - S(100)| > 0.40), deformations such as wrinkles may be caused in the film during the heating step. In this case, it can lead to cracks, distortion, curling, etc., in the functional layer as well, thereby hindering the intended functions of the functional layer. Therefore, the production method for obtaining the laminated structure body according to the present invention preferably includes a step for performing heat treatment at a temperature of 100°C or more and less than 130°C.

For the laminated structure body according to the present invention, it is also preferable that at least one of the functional layers formed is an electrically conductive layer. There are no specific limitations on the electrically conductive layer as long as it exerts its function while electricity is being applied, and examples thereof include electrically conductive fibers such as silver nanowires, carbon nanotubes, and combinations thereof. In addition, they may be in the form of films that contain Ag, Cu, or metal oxides as constituent components. They may be used singly or a plurality thereof may be used in combination. In general, an electrically conductive layer made of these components can work as a transparent electrode. Examples of the metal oxides include ITO ($In_2O_3$:Sn), ATO ($SnO_2$:Sb), FTO ($SnO_2$:F), AZO (ZnO:Al), and GZO (ZnO:Ga). In particular, since layers made of Ag or Cu are likely to suffer degradation through oxidation, it is preferable that these electrically conductive layers are in the form of films that contain metal oxides, particularly ITO, as the primary component. Here, the term "primary component" refers to the component that accounts for more than 50 mass% and 100 mass% or less in the electrically conductive layers.

Furthermore, it is also preferable that the laminated structure body according to the present invention includes a plurality of functional layers at least one of which is a second film having an absolute value of shrinkage rate of 0.20% or less at 120°C. Here, the expression "at least one of the functional layers has an absolute value of shrinkage rate of 0.20% or less at 120°C" indicates that, in the plane of the second film, the absolute value of the shrinkage rate at 120°C is 0.20% or less when measured in a randomly selected direction and at other directions away from the initial direction in 5° increments up to 180°.

For example, when a functional layer is to be laid on the film according to the present invention, the film may already have a protective layer as a functional layer for protecting the film on the opposite surface to the surface where the new functional layer is to be laid, with the aim of preventing the film from suffering scratches, contamination, etc., during handling etc. If such a functional layer is not to be added, the film may already have a protective layer for protecting the film from suffering scratches, contamination, etc., during handling etc. in the step for off-annealing of the film according to the present invention. Such a protective layer is likely to be a film different from the film according to the present invention and the film that constitutes the protective layer is referred to as the second film for the present invention. If the absolute value of the shrinkage rate at 120°C of the second film is maintained at 0.20% or less, it serves to prevent curling from being caused by a shrinkage rate difference between the second film, i.e, the protective layer, and the film according to the present invention during the heating step being carried out for laying another functional layer on the opposite surface. This makes it possible for the functional layer on the opposite side to the surface having the protective layer to be formed easily without impairing its function. Thus, it is preferable that the absolute value of the shrinkage rate at 120°C of the second film is 0.20% or less.

Furthermore, it is preferably a laminated structure body wherein the film according to the present invention and the second film are attached to each other in such a manner that the relation of |θb - θf| ≤ 30° is satisfied where θb is the orientation angle of the film according to the present invention and θf is the orientation angle of the second film. The orientation angle as referred to herein is the direction in which the refractive index measured on the film surface is highest, and practically, it is determined using an optical method. In addition, the value of $|\theta b - \theta f|$ is the maximum value measured along the longitudinal direction and at both longitudinal-directional ends of the laminated film. In general, to perform sequential biaxial stretching for producing a biaxially stretched film, a clip-type tenter is used, particularly in a step for stretching in the film's transverse direction. When performing this method, the film is held by clips at both ends and stretched as it travels along rails, and in this step, there occurs a difference in stress applied in the flow direction of the film between the central area and the areas near the clips, resulting in variations in orientation angle in the film's transverse direction. When heated, the biaxially stretched film produced in this way tends to shrink more largely in the direction of their orientation angle. The relation of $|\theta b - \theta f| \leq 30°$ where $\theta b$ is the orientation angle of the film according to the present invention and $\theta f$ is the orientation angle of the second film suggests that the difference in orientation angle between the film according to the present invention and the second film is small, and this serves to reduce the occurrence of curling that is likely to be caused by a difference in orientation angle between the film according to the present invention and the second film working as a protective layer. Therefore, a new functional layer can be formed easily on the opposite side to the protective layer without compromising its functionality.

There are no particular restrictions on the method to use to control the orientation angle. If a film having a larger orientation angle is to be produced in the step for sequential biaxial stretching, effective methods include the enhancement of orientation in the film's flow direction in the unidirectionally stretched film, which can be achieved by lowering the longitudinal stretching temperature or increasing the longitudinal stretching ratio, and the reduction of orientation in the film's transverse direction in the heat treatment step, which can be achieved by lowering the transverse stretching temperature or increasing the heat treatment temperature.

On the other hand, if a film having a smaller orientation angle is desired, effective methods include the reduction of orientation in the film's flow direction in the unidirectionally stretched film, which can be achieved by increasing the longitudinal stretching temperature or decreasing the longitudinal stretching ratio, and the reduction of orientation in the film's transverse direction, which can be achieved by increasing the transverse stretching temperature or lowering the heat treatment temperature. Furthermore, it is also effective to develop differences in transverse stretching speed or stretching temperature in the transverse stretching step. Specifically, a good method is to divide the transverse stretching period into two sections and they are implemented in such a manner that the stretching ratio of the film at the midpoint of the transverse stretching step (the difference between the film width at the measurement point and the film width before stretching) is equal to 60% or more of the final stretching ratio at the end of the transverse stretching step. In addition, another effective method is to change the temperature stepwise in the transverse stretching step, or more specifically, divide the transverse stretching period into two sections and they are implemented in such a manner that there is a difference of 20°C or more in the ambient temperature between the first and second halves divided at the midpoint of the transverse stretching section.

Furthermore, in order to lay a new functional layer easily on the opposite side to the protective layer without compromising its functionality, it is also preferable that the laminated structure body according to the present invention has functional layers on both sides, wherein either of the functional layers is an electrically conductive layer while the other functional layer is a second film having an absolute value of shrinkage rate of 0.20% or less at 120°C.

It is preferable that the laminated structure body according to the present invention has at least one reflection band in which a reflectance of 30% or more continues over a wavelength range of 20 nm or more in a reflection profile measured from at least one surface. Such a wavelength range is more preferably 100 nm or more, and still more preferably 300 nm or more.

The reflectance at a particular wavelength can be measured as a relative reflectance using an aluminum oxide white board as reference. Details thereof will be described later. The expression "measured from at least one surface" suggests that it is only necessary that the requirement is satisfied for a reflectance measured by applying light to at least either of the surfaces. To form a laminated structure body having at least one reflection band in which a reflectance of 30% or more continues over a wavelength range of 20 nm or more, a good method is to adopt a proper number of layers of the film according to the present invention for constructing the laminated structure body. Specifically, as the number of layers is increased, the width of the reflection band can be broadened.

For the laminated structure body according to the present invention, it is preferable that the reflection band exists in the wavelength range from 850 nm to 1,200 nm. This configuration enables infrared reflection, thereby ensuring excellent heat shielding capability. For example, if such a laminated film is interposed between two glass plates, it will be possible to produce laminated glass that can maintain high heat shielding performance for a long term.

It is preferable for the laminated structure body according to the present invention to have a visible light transmittance of 70% or more. This configuration serves to depress reflection in the visible light range and reduce coloration and glare, thereby ensuring enhanced visibility. For example, if such a laminated structure body is interposed between two glass plates, it will be possible to produce laminated glass that has high transparency and can be applied to automotive windshields etc.

Such a laminated structure body can be easily obtained by using such a laminated film as described above that can be produced from the film according to the present invention. For more than half of the layers that constitute the laminated film, it is preferable that the sum of the optical thicknesses of adjacent layers is 400 nm to 700 nm. Here, the optical thickness as referred to above means the product of the thickness of each layer multiplied by the refractive index of the resin constituting the layer, and the sum of the optical thicknesses of adjacent layers is a factor in determining the wavelength at which interference reflection occurs in the laminated film. Typically, interference reflection occurs in the wavelength range of approximately 800 nm to 1,400 nm in a laminated film where the sum of the optical thicknesses of adjacent layers is 400 nm to 700 nm, and this facilitates the occurrence of a reflection band in the range of 850 nm to 1,200 nm. Furthermore, the reflectance increases with an increasing number of layers and with an increasing difference in average in-plane refractive index between adjacent layers. In the case of a laminated film in which the sum of the optical thicknesses of adjacent layers is 400 nm to 700 nm for more than half of the layers, it will be easier to efficiently increase the average reflectance in the wavelength range of 850 nm to 1,200 nm.

For example, in the case where polyethylene terephthalate with a refractive index of 1.66 and polyethylene terephthalate with a refractive index of 1.55 formed by copolymerizing spiroglycol and cyclohexane dicarboxylic acid are used as resin A and resin B, respectively, the use of a stack of approximately 201 or more layers serves to allow adjacent layers to have a total optical thickness of 400 nm to 700 nm and allow a reflection band where the maximum reflectance is 70% or more to occur in the wavelength range of 850 nm to 1,200 nm. With an increasing difference in in-plane refractive index between the resin A and the resin B, the maximum reflectance in the reflection band becomes higher, and accordingly, a difference in in-plane refractive index of 0.3 or more will serve to develop a sufficient reflectance if at least about 51 layers are present.

Furthermore, in the case where polyethylene terephthalate with a refractive index of 1.66 and polyethylene terephthalate with a refractive index of 1.55 formed by copolymerizing spiroglycol and cyclohexane dicarboxylic acid are used as resin A and resin B, respectively, a layer thickness of 120 to 220 nm is required to allow adjacent layers to have a total optical thickness of 400 nm to 700 nm. It should be noted that with an increasing reflectance in the reflection band present in the wavelength range of 850 nm to 1,200 nm, the resulting film will have a higher heat shielding performance.

Another method to produce a laminated film having an average reflectance of 70% or more in the wavelength range of 850 to 1,200 nm is to develop a structure in which the optical thicknesses of adjacent layers, referred to as A layer and B layer, satisfy the following formulas simultaneously:

$$\text{formula 1: } \lambda = 2(n_\alpha d_\alpha + n_\beta d_\beta)$$

$$\text{formula 2: } n_\alpha d_\alpha = n_\beta d_\beta$$

Here, $\lambda$ is the reflection wavelength; $n_\alpha$ is the in-plane refractive index of the A layer; $d_\alpha$ is the thickness of the A layer; $n\beta$ is the in-plane refractive index of the B layer; and $d\beta$ is the thickness of the B layer. If the film has a layer thickness distribution that satisfies both the formula 1 and formula 2, it serves to eliminate the even-numbered order reflections. Accordingly, the average reflectance in the wavelength range of 400 to 700 nm, which is included in the visible light range, can be decreased while maintaining a high average reflectance in the wavelength range of 850 nm to 1,200 nm, and this makes it possible to produce a film that is transparent and exhibits a high heat ray cutting performance. In general, a film of thermoplastic resin that is shaped and stretched has a refractive index of about 1.4 to 1.9, and accordingly, a film in which even-numbered order reflections are depressed can be obtained by adjusting the thickness ratio between mutually adjacent A layer and B layer (thickness of A layer / thickness of B layer) to 0.7 or more and 1.4 or less. Therefore, it is preferable for mutually adjacent A layer and B layer to have a thickness ratio (thickness of A layer / thickness of B layer) of 0.7 or more and 1.4 or less. It is more preferably 0.8 or more and 1.2 or less.

Thus, in a configuration of the film according to the present invention, at least one surface of the laminated film has a refractive index of 1.68 or more and 1.80 or less. If the refractive index is less than 1.68, it may be difficult occasionally to produce a film that has a reflection band in which a reflectance of 30% or more continues over 20 nm or more in the wavelength range of 300 to 2,500 nm. If the refractive index is more than 1.80, a significant difference in chemical structure can occur between the resin A and the resin B to cause poor lamination between them, possibly leading to significant whitening of the multilayer film or noticeable delamination at the interface between the A layer and the B layer.

A good method to prepare a laminated film in which at least one surface has a refractive index of 1.68 or more and 1.80 or less is to adopt a configuration in which the resin A contains naphthalene dicarboxylic acid as the primary dicarboxylic acid unit. The adoption of this configuration allows the A layer and the B layer to have a proper difference in in-plane refractive index between them, making it easy to produce a laminated polyester film having better reflection performance. In addition, it is also preferable for the B layer to be formed of an amorphous resin in order to increase the difference in in-plane refractive index between the A layer and the B layer. To incorporate naphthalene dicarboxylic acid as a dicarboxylic acid component of the resin A in the film according to the present invention, a useful method is to prepare the resin A from a polyester resin material that contains naphthalene dicarboxylic acid as a dicarboxylic acid component.

The film according to the present invention is particularly suitable for use as a film member of laminated glass that includes an interlayer and a support body, after being formed by undergoing steps in which functional layers are laid while applying heat. In general, laminated glass that has an interlayer and a support body laid on at least one surface of the film is produced through a lamination step involving the application of a lamination pressure, which is preferably implemented by press-molding at an elevated temperature of 120°C to 160°C. In the case where it is press-molded at an elevated temperature of 120°C to 160°C, laminated glass having good external appearance can be produced if the film in use satisfies the relation of $0.50 \leq |S(150) - S(100)|$ because it serves to prevent uneven pressing from being caused by uneven thickness in the interlayer in producing the laminated glass and suppress surface profile deformation in the film due to differences in thermal shrinkage stress between the interlayer and the film.

The film according to the present invention can be used suitably for the production of laminated glass. It is particularly suitable for the production of laminated glass that includes a laminated structure body containing the film according to the present invention with functional layers laid thereon and further includes an interlayer of polyvinyl butyral and a support body of glass that are laid on both sides thereof. This means that it is preferable for the laminated glass to include a glass layer 1, an interlayer 1, a laminated structure body as described above, an interlayer 2, and a glass layer 2 that are stacked in this order. The laminated glass according to the present invention includes the film according to the present invention. Here, the expression "include the film according to the present invention" means that at least either of the film according to the present invention or the laminated structure body according to the present invention is included. It should be noted that the glass to use as the support body is not particularly limited, and commonly used transparent flat glass etc. can be adopted. Examples thereof include clear glass, flat float glass, flat polished glass, flat patterned glass, flat wired glass, flat lined glass, flat infrared-absorbing glass, flat infrared-reflecting glass, and green glass. The use of transparent glass is preferable, and it preferably has a thickness of 0.5 mm to 5.0 mm.

For laminated glass that includes the laminated structure body according to the present invention, it is preferable that the glass layer 1 is positioned on the side where sunlight enters while the electrically conductive layer in the laminated structure body faces the interlayer 1. If the electrically conductive layer is disposed on the side where sunlight enters, it is preferable because the electrically conductive layer can serve to reflect or absorb sunlight, thus ensuring the production of laminated glass that has further enhanced heat shielding capability.

The laminated glass according to the present invention can be used suitably for, for example, windows in buildings and automobiles. It is particularly suitable for use in automobiles that have laminated glass that includes a laminated structure body containing the film according to the present invention with functional layers laid thereon and further includes an interlayer of polyvinyl butyral and a support body of glass laid on both sides thereof. Furthermore, it is also suitable for use in automobiles that have laminated glass including a laminated structure body in which an electrically conductive layer is incorporated as a functional layer so that an optical or thermal function is effected by supplying electricity to the electrically conductive layer.

In addition to those mentioned above, good materials for the interlayer include resins such as vinyl acetate resins, vinyl chloride-vinyl acetate copolymers, ethylene-vinyl acetate copolymers, polyvinyl alcohol, polyvinyl butyral, polyvinyl acetal, polyvinyl ether, nitrile rubber, styrene-butadiene rubber, natural rubber, chloroprene rubber, polyamide resins, epoxy resins, polyurethane resins, acrylic resins, cellulose resins, polyvinyl chloride, polyacrylic acid esters, and polyisobutylene. Furthermore, these interlayer materials may also include additives such as tackifiers, plasticizers, heat stabilizers, antioxidants, ultraviolet light absorbers, antistatic agents, lubricants, colorants, and crosslinking agents. The inclusion of an interlayer serves to increase the adhesion between the support body and the film and improve the aesthetic properties, durability, weather resistance, and impact resistance of the laminated glass. Here, it is preferable for the interlayer to have a thickness of 10 $\mu$m to 1 mm.

Colorants may be added to enhance aesthetic properties, and examples thereof including azo pigments, polycyclic pigments, lake pigments, nitro pigments, nitroso pigments, aniline black, alkali blue, phthalocyanine pigments, cyanine pigments, azo dyes, anthraquinone dyes, quinophthalone dyes, methine dyes, condensed polycyclic dyes, reactive dyes, cationic dyes, lanthanum hexaboride, indium tin oxide, antimony tin oxide, and cesium tungsten oxide.

Good methods for forming laminated glass include extrusion lamination, hot melt lamination, thermal lamination, press lamination, vacuum lamination, and autoclave lamination. Extrusion lamination is a process in which molten materials for the film and interlayer are extruded separately from dies into film-like forms and then stacked on a support body, followed by passing the laminate between two rolls for shaping. Hot melt lamination is a process in which the material for interlayer is melted by heating and applied to a film or support body, followed by combining the film and the support body together. Thermal lamination is a process in which a film, interlayer, and support body are heated and pressed together using heated rolls to carry out their lamination. Press lamination is a process in which a film, interlayer, and support body are heated and then pressed together using a press machine to carry out their lamination. Vacuum lamination is a process in which a film, interlayer, and support body are heated, followed by evacuating the device and pressing the layers together for lamination. Autoclave lamination is a process in which a film, interlayer, and support body are heated, followed by laminating them by pressurizing the device using gas etc.

The film and laminated structure body according to the present invention can be used suitably for the production of other shaped articles than laminated glass, and examples are as described below. Examples of support bodies that can be used for producing shaped articles that contain the film or laminated structure body according to the present invention include resin based support bodies, metal based support bodies, and ceramic based support bodies. The surface of such a support body may be flat or curved, and it can take any desired shape. Examples of good resins include polycarbonate, cyclic polyolefins, polyarylate, polyethylene terephthalate, polymethyl methacrylate, other acrylic resins, ABS, and triacetyl cellulose. Depending on the intended applications of the shaped article, the support body is preferably transparent and preferably has a thickness of 0.5 mm to 5.0 mm.

EXAMPLES

The film according to the present invention is described below with reference to specific examples. It should be noted that even when a thermoplastic resin other than the thermoplastic resins specifically cited herein is adopted, a film according to the present invention may be obtained by following the explanation given in Examples or other parts of the present document.

[Methods for measurement of physical properties and methods for evaluation of effects]

The methods used for evaluation for physical properties and the methods used for evaluation for effects are as described below.

(1) Shrinkage rate, shrinkage onset temperature, and average rate of change

The shrinkage rate was measured using a heat, stress, and strain analyzer device (TMA/SS6000, manufactured by Seiko Instruments Inc.) under the conditions described below. Specimens were prepared by cutting in a randomly selected direction in a plane parallel to the film plane, and then in other directions away from the initial direction in 5° increments up to 180°. Measuring runs were conducted in such a manner that at least one measurement was taken in any 1°C temperature step. The shrinkage rate was calculated for each measuring temperature using the formula 3 given below to provide a thermal shrinkage curve. Three measurements were taken for each direction and the direction where the largest S(150) was obtained was defined as the X direction.

Specimen size: width 4 mm and length 15 mm
Heating range: 25°C to 200°C
Heating rate: 10°C/min
Load for measurement: 19.8 N
Temperature 23°C and relative humidity 65% in atmosphere

$$\text{Formula 3: shrinkage rate at temperature T°C}$$
$$S(T) = (L(25) - L(T)) / L(25) \times 100$$

L(T): Specimen length at temperature T°C

On the thermal shrinkage curve, the point at which the shrinkage rate exceeds 0% for the first time was defined as the shrinkage onset temperature. From the shrinkage rate S(T) determined above, the average rate of change in shrinkage rate in the range of 120°C to 150°C (average rate of change in shrinkage rate) was calculated using the formula 4 given below.

$$\text{Formula 4: average rate of change in shrinkage rate}$$
$$= |S(150) - S(120)| / (150 - 120)$$

(2) Number of layers

The number of layers in a laminated film was determined by sectioning the film with an ultramicrotome to prepare a sample and observing the sample by transmission electron microscopy (TEM). More specifically, under a transmission electron microscope (JEM-1400 Plus, manufactured by JEOL), a cross section of a laminated film was observed at an acceleration voltage of 100 kV, and the image of the cross section was recorded and used to determine the number of layers. Here, a dyeing technique that uses an electron staining agent (such as $RuO_4$ etc.) was adopted to give an increased contrast between layers. Appropriate magnifications were adopted for different layer thicknesses. Observation was performed at a direct magnification of 40,000 for a thin layer with a thickness of less than 100 nm and at a direct magnification of 20,000 for a thin layer with a thickness of 100 nm or more and less than 500 nm. When it is 500 nm or more, an appropriate magnification is selected in the range of 1,000 to 10,000 depending on the thickness. The number of layers was determined based on differences in contrast seen in the images taken.

(3) Layer interface (difference in contrast)

Cross-sectional images obtained by transmission electron microscopy as described in section (2) were converted into a compressed image file (JPEG) format and position-brightness data were taken by line profiling in the thickness direction of the laminated film using ImagePro-10 (distributed by Hakuto Co., Ltd.). Then, a profile was developed by plotting the position-brightness relationship using spreadsheet software (Excel (registered trademark) 2016, distributed by Microsoft) and a five-point moving average curve was added. To obtain the average curve, an average value was calculated by averaging the brightness values measured at five consecutive measuring points, followed by calculating the next average value from the next set of five measurements produced by removing the first one and adding the next one. In this way, a position-brightness profile was obtained from these average values. In the averaged position-brightness profile, a location surrounded by inflection points where the slope changed from positive to negative or from negative to positive was defined as a layer. Then, for each layer identified by the above procedure, position-brightness data were obtained in the plane direction (the direction perpendicular to the thickness direction) of the laminated film. After calculating the average value and standard deviation of the brightness data for each layer, two adjacent layers were considered to be distinct if the difference in average brightness between the two adjacent layers is larger than the standard deviation of brightness values of any of the adjacent thermoplastic resin layers.

(4) Differential scanning calorimetry (DSC)

A differential scanning calorimeter (EXSTAR DSC6220, manufactured by Hitachi High-Technologies Corporation) was used. Measurement was implemented and temperatures were read according to JIS-K-7122 (1987). More specifically, a sample of about 5 mg was heated on an aluminum saucer from 25°C to 300°C at a heating rate of 10°C/min. The temperature at the intersection of the baseline showing the heating from room temperature and the tangent to the curve at the inflection point in the step-like transition area was adopted as the glass transition temperature Tg (°C). After the heating step, the sample was quenched with liquid nitrogen and heating was performed again under the same conditions. In this step, the temperature of the endothermic peak that appeared at the highest temperature was adopted as the melting point (°C). Furthermore, the integrated area defined by the baseline in the range of [melting point $\pm$ 20°C] was adopted as the enthalpy of fusion (J/g).

(5) Orientation angle

A retardation measuring device (KOBRA-21 ADH, manufactured by Oji Scientific Instruments) was used. A sample with a size of 3.5 cm $\times$ 3.5 cm was cut out in such a manner that the length direction of the sample film coincided with the longitudinal direction. Specimens were taken from the center and both ends along the longitudinal direction and both ends along the direction perpendicular to the longitudinal direction, and orientation angles were measured under the conditions of an incident angle of 0° and a wavelength of 590 nm. From the results obtained, $\theta 0$ was measured as the orientation angle in the longitudinal direction, and $\theta b$ and $\theta f$ were defined as the orientation angles that maximize the differences from $\theta 0$.

(6) Curling test

A curling test was conducted to simulate the heating step that is performed during the lamination of functional layers onto protective layers. Evaluations were made for the degree of curling after the heat treatment. An adhesive film consisting of a PET film and an adhesive layer attached thereto was used as protective layer. It was adhered to a film using a hand laminator carefully, ensuring no air bubbles were trapped. Subsequently, the film having an adhered protective layer was cut to a size of 20 mm width $\times$ 20 mm length and subjected to heat treatment at 120°C for 1 hour. A static oven was used for the heat treatment. The degree of curling was determined based on measurements of the height at the four corners of the specimen after heat treatment and then used for evaluation. The criterion used for the evaluation was as shown below. Here, the protective layers used were as listed below.

<Criterion for evaluation>

A: 30 mm or less at all of the four corners
B: 30 mm or less at one or two of the four corners, and more than 30 mm and 50 mm or less at the remaining two or three corners
C: other than A, B, or D
D: more than 50 mm at all of the four corners

< Protective layer>

The thermal shrinkage curve of an adhesive film was prepared according to the procedure described in section (1). Measurement was performed three times in each direction, and adhesive films having maximum absolute values of the shrinkage rate S(120) at 120°C as specified below were adopted.

Adhesive film 1: an adhesive film having a shrinkage rate of 0.15% at 120°C
Adhesive film 2: an adhesive film having a shrinkage rate of 0.28% at 120°C
Adhesive film 3: an adhesive film having a shrinkage rate of 0.35% at 120°C

<Combining direction>

A film and a protective layer were combined in either of the two directions described below according to their orientation angles that were measured by the procedure described in section (5).

parallel directions: The orientation angle of the film $\theta b$ coincides with the orientation angle of the protective layer $\theta f$. In this case, the difference, $\theta b - \theta f$, is equal to the difference between the absolute value of measured $\theta b$ and the absolute value of measured $\theta f$ obtained in section (5).
intersecting directions: The orientation angle of the film $\theta b$ is perpendicular to the orientation angle $\theta f$ of the protective layer $\theta f$. In this case, the difference, $\theta b - \theta f$, is equal to the sum of the absolute value of measured $\theta b$ and the absolute value of measured $\theta f$ obtained in section (5).

(7) Preparation of laminated glass

Using LAMINATOR0303S, manufactured by Nisshinbo, a glass layer 1, an interlayer 1, a film and a laminated structure body prepared in Example or Comparative example, an interlayer 2, and a glass layer 2 were stacked in this order and held and pressed for 30 minutes at a temperature of 140°C under a pressure of 1.5 MPa to produce laminated glass. The glass layer 1 and the glass layer 2 were transparent glass sheets with a size of 100 mm width × 100 mm length × 2 mm thickness, and the interlayer 1 and the interlayer 2 were PVB films with 0.4 mm thickness. Here, in the case where the functional layer was a protective layer, the protective layer was removed and the remaining film was used to produce laminated glass, whereas in the case where the functional layer was an electrically conductive layer, the laminated structure body that included the electrically conductive layer was used to produce laminated glass.

(8) External appearance of laminated glass (surface roughness)

A shaped article was placed under fluorescent lighting, and evaluations were made based on visual observation performed from angles of 20°, 50°, and 70° relative to the normal direction to the region under evaluation. The criterion used for the evaluation was as shown below.

A: No visible irregularities are found.
B: A few visible irregularities are found.
C: Visible irregularities are found.

(9) Formation of glass layer structure

Using LAMINATOR0303S, manufactured by Nisshinbo, a transparent glass layer, an interlayer, and a film prepared in Example 30 were stacked in this order and held and pressed for 30 minutes at a temperature of 140°C under a pressure of 1.5 MPa to produce a glass layer structure. The transparent glass layer used had a size of 100 mm width × 100 mm length × 2 mm thickness. The interlayer used was a PVB film with 0.4 mm thickness.

(10) Laying of electrically conductive layer 1

As the electrically conductive layer 1, an ITO layer was deposited by sputtering using a direct current power supply (indium/tin ratio = 95/5 by mole, thickness 0.2 $\mu$m, ultimate vacuum $1 \times 10^{-3}$ Pa, vacuum in the gas introduction step 0.10 Pa, and gas ratio Ar/$O_2$ = 99/1).

(11) Laying of electrically conductive layer 2

To lay an electrically conductive layer 2, a coating liquid containing silver nanowires was applied using a spin coater at 500 rpm at room temperature and dried at 70°C for 10 minutes to form a transparent electrically conductive layer containing silver nanowires.

(12) Deformation test of electrically conductive layer

An electrically conductive layer 1 was deposited by the procedure described in paragraph (10) and an electrically conductive layer 2 was laid by the procedure described in paragraph (11). Then, the electrically conductive layers were subjected to heat treatment for 1 hour in an static oven at a temperature as specified in Table 2-2 or Table 2-3, followed by deformation evaluation based on visual observation of their external appearance. The criterion used for the evaluation was as shown below.

A: No visible changes caused by heat treatment are seen.
B: Slight whitening or other changes in external appearance are seen in part of the sample after heat treatment.
C: Slight whitening or other changes in external appearance are seen across the entire sample after heat treatment.
D: Significant whitening or other changes in external appearance are seen across the entire sample after heat treatment.

(13) Laying of hard coat layer and deformation evaluation

A coating liquid containing 60 parts by weight of an isocyanate compound in the form of an isocyanurate of hexamethylene diisocyanate relative to 100 parts by weight of a polyester compound and having a solid content adjusted to 40% was prepared and then a slurry in which solid particles of cesium tungsten oxide (Cs0.33 WO3) accounted for 18.5% as solid concentration was added to the coating liquid in a weight ratio of 3:5 to provide a coating liquid designed for the formation of a heat ray absorbing layer. Such a coating liquid was spread over one side of a sample using a wire bar coater, dried at 110°C for 10 minutes, and exposed to 500 mJ/$cm^2$ of ultraviolet ray emitted from a UV irradiation device to cure the coating film into a hard coat layer. An evaluation was made on the basis of visual observation for deformation that occurred in the hard coat layer during the drying step carried out for forming the hard coat layer. The criterion used for the evaluation was as shown below.

A: No curling of the film and no changes in external appearance of the hard coat layer are seen.
B: Curling of the film or changes in external appearance of the hard coat layer are seen.

(14) Reflectance

A 5 cm $\times$ 5 cm sample was cut out and examined to determine its reflectance using a spectrophotometer manufactured by Hitachi, Ltd. (U-4100 Spectrophotomater) in the basic mode including the accessory integrating sphere. The reflectance measurement was performed using the auxiliary white plate of aluminum oxide attached to the equipment as reference. Measurements of reflectance were taken from a sample that was fixed behind the integrating sphere with its length pointing in the vertical direction. The reflectance was measured under the conditions specified below and the average reflectance over the wavelength range from 850 nm to 1,200 nm was calculated.

<Measuring conditions>

slit: 2 mm (visible light) / automatic control (infrared light)
gain: 2
scanning speed: 600 nm/min
initial wavelength: 2,600 nm

final wavelength: 240 nm
sampling interval: 1 nm
angle of incidence: 10°

<Plane of incidence>

For a sample having a protective layer as a functional layer: the surface of the film

For a sample having electrically conductive layers (electrically conductive layer 1 and electrically conductive layer 2) as functional layers: the surface of an electrically conductive layer
For a sample having electrically conductive layer as a functional layer and a protective layer as another functional layer: the surface of the electrically conductive layer
For a sample having a hard coat layer as a functional layer: the surface of the hard coat layer

(15) Transmittance

Using a spectrophotometer (U-4100 Spectrophotomater, manufactured by Hitachi, Ltd.) in the basic mode (solid measurement system), measurements were taken under the conditions described below and the average transmittance over the wavelength range of 450 nm to 700 nm was determined and adopted as the visible light transmittance.

<Measuring conditions>

slit: 2 mm (visible light) / automatic control (infrared light)
gain: 2
scanning speed: 600 nm/min
initial wavelength: 700 nm
final wavelength: 400 nm
sampling interval: 1 nm
angle of incidence: 0°

(16) Heat shielding capability

The total energy transmittance (Tts) of the laminated glass prepared in section (7) and the glass layer structure prepared in section (9) was measured according to ISO 13837:2008 "Road traveling vehicles - Safe glazing materials - Measuring methods for sunlight transmittance", where the plane of incidence was the surface of the glass layer 1 for the laminated glass and the surface of the transparent glass plate for the glass layer structure. The total energy transmittance (Tts) of the laminated glass was evaluated according to the four-grade criterion specified below.

A: The total energy transmittance (Tts) of the laminated glass is 50% or less.
B: The total energy transmittance (Tts) of the laminated glass is more than 50% and less than 70%.
C: The total energy transmittance (Tts) of the laminated glass is 70% or more and less than 80%.
D: The total energy transmittance (Tts) of the laminated glass is 80% or more.

(17) Quality of film

The quality of a film sample was evaluated based on visual observation for scratches on the film surface.

A: Almost no scratches are found on the film surface.
B: A few scratches are found on the film surface.

(18) Refractive index of A layer in laminated film

The refractive index on the outermost surface of a film sample was measured using a prism coupler (SPA-400, manufactured by Cylon Technologies). A laser with a wavelength of 633 nm was used for measurement. On the two outermost surfaces, the in-plane refractive index was measured in the X direction and in another direction (Y direction) that was rotated by 90° from the X direction in parallel with the film, followed by calculating the average of the all measurements.

(19) Refractive index of B layer and C layer in laminated film

The B layer and the C layer are present inside the laminated film. Therefore, instead of the film, an isolated B layer and C layer were prepared under the same stretching and heat treatment conditions as used for the film and their refractive indices were measured using a prism coupler (SPA-400, manufactured by Cylon Technologies). A laser with a wavelength of 633 nm was used for measurement. The in-plane refractive index was measured in the X direction and in another direction (Y direction) that was rotated by 90° from the X direction in parallel with the film, followed by calculating the average of the all measurements.

(Resin used as film material)

Described below are the resins used in the examples of the present invention. Here, the refractive index represents the in-plane refractive index (average of refractive index measurements in the X direction and the Y direction) of a sheet of a resin stretched under the conditions specified in each example. It should be noted that all samples prepared under the stretching conditions direction in the examples showed the same in-plane refractive index.

Resin 1: crystalline homopolyethylene terephthalate resin (IV = 0.65, in-plane refractive index = 1.66) having a glass transition temperature of 78°C, a melting point of 254°C, and a melting enthalpy of 40 J/g

Resin 2: amorphous polyethylene terephthalate copolyester resin (IV = 0.72, in-plane refractive index = 1.54) in which the cyclohexanedicarboxylic acid component accounts for 20 mol% of the total salt component while the spiroglycol component accounts for 20 mol% of the total diol component and having a glass transition temperature of 78°C

Resin 3: crystalline polyethylene terephthalate resin (IV = 0.65, in-plane refractive index = 1.62) copolymerized with 10 mol% isophthalic acid and having a glass transition temperature of 79°C, a melting point of 230°C, and a melting enthalpy of 12 J/g

Resin 4: amorphous polyethylene terephthalate resin (IV = 0.73, in-plane refractive index = 1.57) copolymerized with 33 mol% cyclohexanedimethanol and having a glass transition temperature of 80°C

Resin 5: amorphous homopolymethylene methacrylate resin (in-plane refractive index = 1.49) having a glass transition temperature of 101°C

(Example 1)

Two different types of thermoplastic resin layers having different primary components were used for the A1 layer and the B1 layer, respectively. The resin 1 was used as the thermoplastic resin to form the A1 layer while the resin 2 was used as the thermoplastic resin to form the B1 layer. The resin 1 and the resin 2 were melted at 280°C in separate extruders and filtered through five FSS type leaf disk filters to remove foreign objects etc. Then, they were extruded while weighing in gear pumps to adjust the discharging ratio (lamination ratio) between the resin 1 and the resin 2 to 1/1.07. In this way, they were combined in a 501-layer feed block. Here, both outermost layers were of the resin 1. From either surface of the film toward the other surface, alternating A1 and B1 layers which include the resin 1 and the resin 2, respectively, and were located adjacently, were stacked in such a manner that they satisfied the formula 1 and the formula 2 described above. Their thicknesses were varied in a geometric sequence in such a manner that the thickness of the finally resulting A1 layers would be in the range of 130 nm to 180 nm while the thicknesses of the finally resulting B1 layers would be in the range of 137 nm to 190 nm (except that the A1 layers that formed the outermost layers were adjusted to have a final thickness of 10 μm). Then, the resulting molten multilayer body was supplied to a T-die, where it was shaped into a sheet, and while applying an electrostatic voltage of 8 kv from a wire, it was quenched for solidification on a casting drum having a surface temperature maintained at 25°C to produce an unoriented sheet. This unoriented sheet was stretched by rolls with different circumferential speeds in the longitudinal direction at a temperature of 90°C in a stretching ratio of 3.3 to provide a uniaxially oriented sheet. Subsequently, the resulting uniaxially oriented sheet was introduced into a tenter with both ends held by clips and stretched in the transverse direction at a temperature of 100°C in a stretching ratio of 4.0, followed by heat treatment at 205°C for 10 seconds, 3% relaxation in the transverse direction, and cooling at 150°C for 10 seconds to provide a sheet having a thickness of 80 μm. The sheet produced in this way was sent into a hot-air oven maintained at 130°C. While traveling in such manner that it took 60 seconds to pass through the oven, it was subjected to off-annealing treatment under the conditions of no tension applied in the transverse direction (the sheet was in a non-constrained state in the width direction of the sheet) and a winding tension of 60 N in the longitudinal direction, thereby providing a film. Evaluation results of the sheet and film thus obtained are shown in Table 1-1 and Table 1-2. It should be noted that the layers under curling test were placed in parallel directions when combined.

(Examples 2 to 5, 8, 10, 11, and 14 to 17)

Except for adopting a heat treatment temperature and off-annealing treatment temperature, or omission thereof, as specified in Table 1-1 and using a protective sheet for curling test as specified in Table 1-2, the same procedure as in Example 1 was carried out to prepare a sheet and a film and make evaluations thereof. Evaluation results obtained are shown in Table 1-2.

(Example 6)

Except that only thermoplastic resin layers of the resin 1 were fed in extruders, the same procedure as in Example 1 was carried out to prepare a sheet and a film and make evaluations thereof. Evaluation results obtained are shown in Table 1-1 and Table 1-2.

(Example 7)

Three different types of thermoplastic resin layers having different primary components were used for A2 layers, B2 layers, and C2 layers, respectively. The resin 1 was used as the thermoplastic resin to form the A2 layers; the resin 3 was used as the thermoplastic resin to form the B2 layers; and the resin 4 was used as the thermoplastic resin to form the C2 layers. Then, the resin 1, the resin 3, and the resin 4 were melted at 270°C, 270°C, and 280°C, respectively, in separate extruders and filtered separately through seven FSS type leaf disk filters. Then, while weighing in gear pumps to adjust the discharging ratio (lamination ratio) of the resin 1 to the resin 3 to 0.98 and that of the resin 4 to the resin 3 to 1.02, they were extruded and combined in a 601-layer feed block. In this step, they were stacked in such a manner that both outermost layers were of the resin 1 and that they were layered regularly in the order of [A2 layer / B2 layer / C2 layer / B2 layer] in the thickness direction. The slit length and width of the feedblock used here were designed to produce a structure in which, except for the outermost ones, the layer thickness increased monotonically from one surface to the opposite surface. Then, the resulting molten multilayer body was supplied to a T-die, where it was shaped into a sheet, and while applying an electrostatic voltage of 8 kv from a wire, it was quenched for solidification on a casting drum having a surface temperature maintained at 25°C to produce an unoriented sheet. This unoriented sheet was stretched in the longitudinal direction at a temperature of 80°C in a stretching ratio of 3.3 to provide a uniaxially oriented sheet. Subsequently, the resulting uniaxially oriented sheet was introduced into a tenter with both ends held by clips and stretched in the transverse direction at a temperature of 90°C in a stretching ratio of 3.6, followed by heat treatment at 205°C for 10 seconds, 5% relaxation in the transverse direction, and cooling at 150°C for 10 seconds to provide a sheet having a thickness of 80 $\mu$m. The resulting sheet was subjected to off-annealing treatment under the same conditions as in Example 1 to provide a film. Curling test was conducted using the same adhesive film. Evaluation results of the sheet and film thus obtained are shown in Table 1-1 and Table 1-2.

(Example 9)

Except for using a resin 5 as the thermoplastic resin to form B1 layers, melting it at a temperature of 260°C, stretching the unoriented sheet at 105°C, and stretching the uniaxially oriented sheet at 110°C, the same procedure as in Example 1 was carried out to provide a sheet and a film and make evaluations thereof. Evaluation results obtained are shown in Table 1-1 and Table 1-2.

(Example 18)

Except that the extruded resin layers were combined in a 51-layer feed block, the same procedure as in Example 1 was carried out to prepare a sheet and a film and make evaluations thereof. Evaluation results obtained are shown in Table 1-1 and Table 1-2.

(Example 19)

Except that transverse stretching was performed in a stretching ratio of 3.2, the same procedure as in Example 1 was carried out to prepare a sheet and a film and make evaluations thereof. Evaluation results obtained are shown in Table 1-1 and Table 1-2.

(Example 20)

Except that the layers used for curling test were combined in intersecting directions, the same procedure as in Example 1 was carried out to prepare a sheet and a film and make evaluations thereof. Evaluation results obtained are shown in Table 1-1 and Table 1-2.

(Comparative example 1)

A sheet prepared according to the same procedure as in Example 1 was processed into a film without subjecting it to the off-annealing treatment step. Evaluation results of the film thus obtained are shown in Table 1-1 and Table 1-2.

(Comparative example 2)

A sheet prepared according to the same procedure as in Example 2 was processed into a film without subjecting it to the off-annealing treatment step. Evaluation results of the film thus obtained are shown in Table 1-1 and Table 1-2.

(Comparative example 3)

Except that heat treatment was performed at a temperature of 225°C, a sheet was prepared according to the same procedure as in Example 1 and then processed into a film without subjecting it to the off-annealing treatment step. Evaluation results of the film thus obtained are shown in Table 1-1 and Table 1-2.

(Comparative example 4)

Except that heat treatment was performed at a temperature of 235°C, a sheet was prepared according to the same procedure as in Example 1 and then processed into a film without subjecting it to the off-annealing treatment step. Evaluation results of the film thus obtained are shown in Table 1-1 and Table 1-2.

(Comparative example 5)

A sheet prepared according to the same procedure as in Example 6 was processed into a film without subjecting it to the off-annealing treatment step. Evaluation results of the sheet and film thus obtained are shown in Table 1-1 and Table 1-2.

(Comparative example 6)

A sheet prepared according to the same procedure as in Example 7 was processed into a film without subjecting it to the off-annealing treatment step. Evaluation results of the sheet and film thus obtained are shown in Table 1-1 and Table 1-2.

(Comparative example 7)

Except that in the off-annealing treatment step, the temperature of the hot-air oven was adjusted to 100°C, the same procedure as in Example 3 was carried out to prepare a film. Evaluation results of the sheet and film thus obtained are shown in Table 1-1 and Table 1-2.

(Comparative example 8)

Except that in the off-annealing treatment step, the temperature of the hot-air oven was adjusted to 150°C, the same procedure as in Example 2 was carried out to prepare a film. Evaluation results of the sheet and film thus obtained are shown in Table 1-1 and Table 1-2.

(Example 12)

A sheet and a film were prepared according to the same procedure as in Example 1 and an electrically conductive layer 1 was additionally laid according to the procedure described in section (8). Evaluation results of the sheet, film, and electrically conductive layer-laminated structure thus obtained are shown in Table 2-1 and Table 2-2. Then, laminated glass was produced in such a manner that the electrically conductive layer 1 faced the glass layer 1.

(Example 13)

A sheet and a film were prepared according to the same procedure as in Example 2 and an electrically conductive layer was additionally laid according to the procedure described in section (8). Evaluation results of the sheet, film, and electrically conductive layer-laminated structure body thus obtained are shown in Table 2-1 and Table 2-2. Then, laminated glass was produced in such a manner that the electrically conductive layer 1 faces the glass layer 1.

(Example 21)

Except that deformation test of the electrically conductive layer 1 described in section (12) was carried out at a temperature as specified in Table 2-2, the same procedure as in Example 12 was carried out to provide a sheet and a film and make evaluations thereof. Evaluation results obtained are shown in Table 2-1 and Table 2-2.

(Example 22)

Except that laminated glass was produced in such a manner that the electrically conductive layer 1 faced the glass layer 2, the same procedure as in Example 12 was carried out to provide a sheet and a film and make evaluations thereof. Evaluation results obtained are shown in Table 2-1 and Table 2-2.

(Example 23)

Except that an electrically conductive layer 2 was formed as the functional layer, the same procedure as in Example 12 was carried out to provide a sheet and a film and make evaluations thereof. Evaluation results obtained are shown in Table 2-1 and Table 2-2.

(Example 24)

Except that laminated glass was produced in such a manner that the electrically conductive layer 2 faced the glass layer 2, the same procedure as in Example 23 was carried out to provide a sheet and a film and make evaluations thereof. Evaluation results obtained are shown in Table 2-1 and Table 2-2.

(Comparative example 9)

An electrically conductive layer was laid on a film formed as described in Comparative example 2 according to the procedure described in section (7). Evaluation results of the film and electrically conductive layer-laminated structure thus obtained are shown in Table 2-1 and Table 2-2.

(Comparative example 10)

An electrically conductive layer was laid on a film formed as described in Comparative example 4 according to the procedure described in section (7). Evaluation results of the film and electrically conductive layer-laminated structure thus obtained are shown in Table 2-1 and Table 2-2.

(Example 25)

Except that an electrically conductive layer 2 was formed as a functional layer while a protective layer as specified in Table 3-2 was formed as the other functional layer, the same procedure as in Example 23 was carried out to provide a sheet and a film and make evaluations thereof. Evaluation results obtained are shown in Table 3-1 and Table 3-2. It should be noted that the layers used for curling test were combined in parallel directions.

(Example 26)

Except that the protective layer was replaced with a protective layer as specified in Table 3-2, the same procedure as in Example 25 was carried out to provide a sheet and a film and make evaluations thereof. Evaluation results obtained are shown in Table 3-1 and Table 3-2.

(Example 27)

Except that the layers used for curling test were combined in intersecting directions, the same procedure as in Example 25 was carried out to provide a sheet and a film and make evaluations thereof. Evaluation results obtained are shown in Table 3-1 and Table 3-2.

(Example 28)

Except that the layers used for curling test were combined in intersecting directions, the same procedure as in Example 26 was carried out to provide a sheet and a film and make evaluations thereof. Evaluation results obtained are shown in Table 3-1 and Table 3-2.

(Example 29)

Except that the deformation test of the electrically conductive layer 2 described in paragraph (12) was carried out at a temperature as specified in Table 3-2, the same procedure as in Example 23 was carried out to provide a sheet and a film and make evaluations thereof. Evaluation results obtained are shown in Table 3-1 and Table 3-2.

(Example 30)

Except that a hard coat layer was formed as the functional layer, the same procedure as in Example 1 was carried out to provide a sheet and a film and make evaluations thereof. Evaluation results obtained are shown in Table 4-1 and Table 4-2.

[Table 1-1]

[Table 1-1]

| | characteristics of film (X direction) | | | | | | resin | | | number of layers | sheet | | heat treatment temperature (°C) | off-annealing temperature (°C) |
|---|---|---|---|---|---|---|---|---|---|---|---|---|---|---|
| | \|S(150)−S(100)\| (%) | \|S(120)−S(100)\| (%) | shrinkage onset temperature (°C) | average shrinkage rate between 100°C and 120°C (%) | absolute value of average rate of change of shrinkage rate between 120°C and 150°C (%/°C) | orientation angle θb(°) | A layer | B layer | C layer | | \|S(150)−S(100)\| (%) | \|S(120)−S(100)\| (%) | | |
| Example 1 | 1.10 | 0.02 | 136 | 0.32 | 0.04 | 19 | resin 1 | resin 2 | - | 501 | 1.81 | 0.49 | 205 | 130 |
| Example 2 | 1.51 | 0.04 | 133 | 0.34 | 0.05 | 15 | resin 1 | resin 2 | - | 501 | 2.24 | 0.47 | 195 | 130 |
| Example 14 | 1.25 | 0.18 | 136 | 0.42 | 0.04 | 19 | resin 1 | resin 2 | - | 501 | 1.81 | 0.49 | 205 | 120 |
| Example 15 | 2.52 | 0.03 | 143 | 0.32 | 0.09 | 15 | resin 1 | resin 2 | - | 501 | 2.24 | 0.47 | 195 | 120 |
| Example 3 | 2.52 | 0.19 | 128 | 0.22 | 0.08 | 13 | resin 1 | resin 2 | - | 501 | 3.58 | 0.85 | 185 | 130 |
| Example 16 | 3.00 | 0.20 | 115 | 0.02 | 0.09 | 11 | resin 1 | resin 2 | - | 501 | 4.20 | 1.00 | 175 | 120 |
| Example 8 | 0.55 | 0.05 | 155 | 0.54 | 0.02 | 15 | resin 1 | resin 2 | - | 501 | 2.24 | 0.47 | 195 | 140 |
| Example 5 | 0.54 | 0.25 | 140 | 0.18 | 0.01 | 21 | resin 1 | resin 2 | - | 501 | 1.15 | 0.25 | 215 | 130 |
| Example 4 | 2.56 | 0.38 | 105 | -0.14 | 0.07 | 13 | resin 1 | resin 2 | - | 501 | 3.58 | 0.85 | 185 | 110 |
| Example 17 | 1.52 | 0.25 | 117 | 0.05 | 0.04 | 19 | resin 1 | resin 2 | - | 501 | 1.81 | 0.49 | 205 | 100 |
| Example 6 | 1.67 | 0.05 | 131 | 0.33 | 0.05 | 19 | resin 1 | - | - | 1 | 2.50 | 0.55 | 205 | 130 |
| Example 18 | 1.12 | 0.02 | 135 | 0.32 | 0.04 | 19 | resin 1 | resin 2 | - | 51 | 1.85 | 0.51 | 205 | 130 |
| Example 7 | 1.75 | 0.06 | 135 | 0.35 | 0.05 | 19 | resin 1 | resin 3 | resin 4 | 601 | 2.54 | 0.58 | 205 | 130 |
| Example 9 | 1.48 | 0.03 | 135 | 0.33 | 0.05 | 19 | resin 1 | resin 5 | - | 501 | 2.15 | 0.69 | 205 | 130 |
| Example 19 | 1.15 | 0.04 | 136 | 0.32 | 0.04 | 41 | resin 1 | resin 2 | - | 501 | 2.21 | 0.49 | 205 | 130 |
| Example 20 | 1.10 | 0.02 | 136 | 0.32 | 0.04 | 19 | resin 1 | resin 2 | - | 501 | 1.81 | 0.49 | 205 | 130 |
| Example 10 | 1.10 | 0.02 | 136 | 0.32 | 0.04 | 19 | resin 1 | resin 2 | - | 501 | 1.81 | 0.49 | 205 | 130 |
| Example 11 | 1.51 | 0.04 | 133 | 0.34 | 0.05 | 15 | resin 1 | resin 2 | - | 501 | 2.24 | 0.47 | 195 | 130 |
| Comparative example 1 | 1.81 | 0.49 | 86 | -0.43 | 0.04 | 19 | resin 1 | resin 2 | - | 501 | - | - | 205 | - |
| Comparative example 2 | 2.24 | 0.47 | 90 | -0.40 | 0.06 | 15 | resin 1 | resin 2 | - | 501 | - | - | 195 | - |

(continued)

| | characteristics of film (X direction) | | | | | | resin | | | number of layers | sheet | | heat treatment temperature (°C) | off-annealing temperature (°C) |
|---|---|---|---|---|---|---|---|---|---|---|---|---|---|---|
| | \|S(150)--S(100)\| (%) | \|S(120)--S(100)\| (%) | shrinkage onset temperature (°C) | average shrinkage rate between 100°C and 120°C (%) | absolute value of average rate of change of shrinkage rate between 120°C and 150°C (%/°C) | orientation angle θb(°) | A layer | B layer | C layer | | \|S(150)--S(100)\| (%) | \|S(120)--S(100)\| (%) | | |
| Comparative example 3 | 0.44 | 0.18 | 108 | -0.01 | 0.01 | 24 | resin 1 | resin 2 | - | 501 | - | - | 225 | - |
| Comparative example 4 | 0.07 | 0.03 | 171 | 0.24 | 0.00 | 28 | resin 1 | resin 2 | - | 501 | - | - | 235 | - |
| Comparative example 5 | 2.50 | 0.55 | 85 | -0.35 | 0.06 | 19 | resin 1 | - | - | 1 | - | - | 205 | - |
| Comparative example 6 | 2.54 | 0.58 | 88 | -0.38 | 0.06 | 19 | resin 1 | resin 3 | resin 4 | 601 | - | - | 205 | - |
| Comparative example 7 | 2.22 | 0.45 | 150 | 0.33 | 0.07 | 13 | resin 1 | resin 2 | - | 501 | 3.58 | 0.85 | 185 | 100 |
| Comparative example 8 | 0.40 | 0.03 | 165 | 0.22 | 0.01 | 15 | resin 1 | resin 2 | - | 501 | 2.24 | 0.47 | 195 | 150 |

In this table, both the A1 layer and the A2 layer are indicated as A layer; both the B1 layer and the B2 layer are indicated as B layer; and the C2 layer is indicated as C layer. They are indicated similarly in other tables.

[Table 1-2]

[Table 1-2]

| | function layer of laminated structure body | | absolute shrinkage rate at 120°C (%) | orientation angle θf(°) | $|θb-θf|$ (°) | characteristics of laminated structure body | | | effect | | | |
| | type of function layer | type of protective layer | | | | reflection range where reflectance is 30% or more | average reflectance between wavelength 850 nm and 1,200 nm (%) | visible light transmittance (%) | appearance | curling | film quality | heat shielding property |
|---|---|---|---|---|---|---|---|---|---|---|---|---|
| Example 1 | protective layer | adhesive film 1 | 0.15 | 20 | 1 | 300 nm or more | 95 | 90 | A | A | A | B |
| Example 2 | protective layer | | 0.15 | 20 | 5 | 300 nm or more | 94 | 90 | A | A | A | B |
| Example 14 | protective layer | | 0.15 | 20 | 1 | 300 nm or more | 95 | 90 | A | A | A | B |
| Example 15 | protective layer | | 0.15 | 20 | 5 | 300 nm or more | 94 | 90 | A | A | A | B |
| Example 3 | protective layer | | 0.15 | 20 | 7 | 300 nm or more | 94 | 90 | A | A | B | B |
| Example 16 | protective layer | | 0.15 | 20 | 9 | 300 nm or more | 93 | 90 | A | C | B | B |
| Example 8 | protective layer | | 0.15 | 20 | 5 | 300 nm or more | 94 | 90 | B | A | A | B |
| Example 5 | protective layer | | 0.15 | 20 | 1 | 300 nm or more | 95 | 90 | B | B | B | B |
| Example 4 | protective layer | | 0.15 | 20 | 7 | 300 nm or more | 95 | 90 | A | C | B | B |
| Example 17 | protective layer | | 0.15 | 20 | 1 | 300 nm or more | 95 | 90 | A | C | A | B |
| Example 6 | protective layer | | 0.15 | 20 | 1 | none | 9 | 90 | A | A | A | D |
| Example 18 | protective layer | | 0.15 | 20 | 1 | 100 nm or more | 73 | 90 | A | A | A | C |

| | function layer of laminated structure body | | | | characteristics of laminated structure body | | | | effect | | | |
|---|---|---|---|---|---|---|---|---|---|---|---|---|
| | type of function layer | type of protective layer | absolute shrinkage rate at 120°C (%) | orientation angle θf(°) | \|θb-θf\| (°) | reflection range where reflectance is 30% or more | average reflectance between wavelength 850 nm and 1,200 nm (%) | visible light transmittance (%) | appearance | curling | film quality | heat shielding property |
| Example 7 | protective layer | | 0.15 | 20 | 1 | 300 nm or more | 95 | 90 | A | A | A | B |
| Example 9 | protective layer | | 0.15 | 20 | 1 | 300 nm or more | 96 | 90 | A | A | A | B |
| Example 19 | protective layer | | 0.15 | 20 | 21 | 300 nm or more | 95 | 90 | A | B | A | B |
| Example 20 | protective layer | | 0.15 | 20 | 39 | 300 nm or more | 95 | 90 | A | C | A | B |
| Example 10 | protective layer | adhesive film 2 | 0.28 | 20 | 1 | 300 nm or more | 95 | 90 | A | B | A | B |
| Example 11 | protective layer | adhesive film 3 | 0.35 | 20 | 5 | 300 nm or more | 94 | 90 | A | C | A | B |
| Comparative example 1 | protective layer | | 0.15 | 20 | 1 | 300 nm or more | 95 | 90 | A | D | - | B |
| Comparative example 2 | protective layer | | 0.15 | 20 | 5 | 300 nm or more | 94 | 90 | A | D | - | B |
| Comparative example 3 | protective layer | | 0.15 | 20 | 4 | 300 nm or more | 95 | 90 | C | A | - | B |
| Comparative example 4 | protective layer | adhesive film 1 | 0.15 | 20 | 8 | 300 nm or more | 95 | 90 | C | A | - | B |
| Comparative example 5 | protective layer | | 0.15 | 20 | 1 | none | 9 | 90 | A | D | - | D |
| Comparative example 6 | protective layer | | 0.15 | 20 | 1 | 300 nm or more | 95 | 90 | A | D | - | B |
| Comparative example 7 | protective layer | | 0.15 | 20 | 7 | 300 nm or more | 94 | 90 | A | D | B | B |

EP 4 592 336 A1

(continued)

| | function layer of laminated structure body | | | | | characteristics of laminated structure body | | | effect | | |
|---|---|---|---|---|---|---|---|---|---|---|---|
| | type of function layer | type of protective layer | absolute shrinkage rate at 120°C (%) | orientation angle θf(°) | \|θb-θf\| (°) | reflection range where reflectance is 30% or more | average reflectance between wavelength 850 nm and 1,200 nm (%) | visible light transmittance (%) | appearance | curling | film quality | heat shielding property |
| Comparative example 8 | protective layer | | 0.15 | 20 | 5 | 300 nm or more | 94 | 90 | C | A | A | B |

[Table 2-1]

[Table 2-1]

| | characteristics of film (X direction) | | | | | resin | | | | sheet | | heat treatment temperature (°C) | off-annealing temperature (°C) |
|---|---|---|---|---|---|---|---|---|---|---|---|---|---|
| | \|S(150)--S(100)\| (%) | \|S(120)--S(100)\| (%) | shrinkage onset temperature (°C) | average shrinkage rate between 100°C and 120°C (%) | absolute value of average rate of change of shrinkage rate between 120°C and 150°C (%/°C) | A layer | B layer | C layer | number of layers | \|S(150)--S(100)\| (%) | \|S(120)--S(100)\| (%) | | |
| Example 12 | 1.10 | 0.02 | 136 | 0.32 | 0.04 | resin 1 | resin 2 | - | 501 | 1.81 | 0.49 | 205 | 130 |
| Example 13 | 1.51 | 0.04 | 133 | 0.34 | 0.05 | resin 1 | resin 2 | - | 501 | 2.24 | 0.47 | 195 | 130 |
| Example 21 | 1.10 | 0.02 | 136 | 0.32 | 0.04 | resin 1 | resin 2 | - | 501 | 1.81 | 0.49 | 205 | 130 |
| Example 22 | 1.10 | 0.02 | 136 | 0.32 | 0.04 | resin 1 | resin 2 | - | 501 | 1.81 | 0.49 | 205 | 130 |
| Example 23 | 1.10 | 0.02 | 136 | 0.32 | 0.04 | resin 1 | resin 2 | - | 501 | 1.81 | 0.49 | 205 | 130 |
| Example 24 | 1.10 | 0.02 | 136 | 0.32 | 0.04 | resin 1 | resin 2 | - | 501 | 1.81 | 0.49 | 205 | 130 |
| Comparative example 9 | 2.24 | 0.47 | 90 | -0.40 | 0.06 | resin 1 | resin 2 | - | 501 | - | - | 195 | - |
| Comparative example 10 | 0.07 | 0.03 | 171 | 0.24 | 0.00 | resin 1 | resin 2 | - | 501 | - | - | 235 | - |

[Table 2-2]

EP 4 592 336 A1

[Table 2-2]

| | function layer of laminated structure body | | characteristics of laminated structure body | | | effect | | | |
|---|---|---|---|---|---|---|---|---|---|
| | type of function layer | temperature for electrically conductive layer deformation test (°C) | reflection range where reflectance is 30% or more | average reflectance between wavelength 850 nm and 1,200 nm (%) | visible light transmittance (%) | appearance | deformation of electrically conductive layer | film quality | heat shielding property |
| Example 12 | electrically conductive layer 1 | 120 | 300 nm or more | 95 | 87 | A | A | A | A |
| Example 13 | electrically conductive layer 1 | 120 | 300 nm or more | 94 | 87 | A | A | A | A |
| Example 21 | electrically conductive layer 1 | 140 | 300 nm or more | 95 | 87 | A | C | A | A |
| Example 22 | electrically conductive layer 1 | 120 | 300 nm or more | 95 | 87 | A | A | A | B |
| Example 23 | electrically conductive layer 2 | 120 | 300 nm or more | 96 | 85 | A | A | A | A |
| Example 24 | electrically conductive layer 2 | 120 | 300 nm or more | 96 | 85 | A | A | A | B |
| Comparative example 9 | electrically conductive layer 1 | 120 | 300 nm or more | 95 | 87 | A | D | - | A |
| Comparative example 10 | electrically conductive layer 1 | 120 | 300 nm or more | 95 | 87 | C | A | - | A |

36

[Table 3-1]

[Table 3-1]

[Table 3-1]

| | characteristics of film (X direction) | | | | | | resin | | | number of layers | sheet | | heat treatment temperature (°C) | off-annealing temperature (°C) |
|---|---|---|---|---|---|---|---|---|---|---|---|---|---|---|
| | \|S(150)--S(100)\| (%) | \|S(120)--S(100)\| (%) | shrinkage onset temperature (°C) | average shrinkage rate between 100°C and 120°C (%) | absolute value of average rate of change of shrinkage rate between 120°C and 150°C (%/°C) | orientation angle θb(°) | A layer | B layer | C layer | | \|S(150)--S(100)\| (%) | \|S(120)--S(100)\| (%) | | |
| Example 25 | 1.10 | 0.02 | 136 | 0.32 | 0.04 | 19 | resin 1 | resin 2 | - | 501 | 1.81 | 0.49 | 205 | 130 |
| Example 26 | 1.10 | 0.02 | 136 | 0.32 | 0.04 | 19 | resin 1 | resin 2 | - | 501 | 1.81 | 0.49 | 205 | 130 |
| Example 27 | 1.10 | 0.02 | 136 | 0.32 | 0.04 | 19 | resin 1 | resin 2 | - | 501 | 1.81 | 0.49 | 205 | 130 |
| Example 28 | 1.10 | 0.02 | 136 | 0.32 | 0.04 | 19 | resin 1 | resin 2 | - | 501 | 1.81 | 0.49 | 205 | 130 |
| Example 29 | 1.10 | 0.02 | 136 | 0.32 | 0.04 | 19 | resin 1 | resin 2 | - | 501 | 1.81 | 0.49 | 205 | 130 |

[Table 3-2]

[Table 3-2]

[Table 3-2]

| | function layer of laminated structure body | | function layer of laminated structure body | | | | characteristics of laminated structure body | | | effect | | | | |
|---|---|---|---|---|---|---|---|---|---|---|---|---|---|---|---|
| | type of function layer | temperature for electrically conductive layer deformation test (°C) | type of function layer | type of protective layer | absolute shrinkage rate at 120°C (%) | orientation angle θf(°) | \|θb-θf\| (°) | reflection range where reflectance is 30% or more | average reflectance between wavelength 850 nm and 1,200 nm (%) | visible light transmittance (%) | appearance | curling | deformation of electrically conductive laver | film quality | heat shielding property |
| Example 25 | electrically conductive layer 2 | 120 | protective layer | adhesive film 1 | 0.15 | 20 | 1 | 300 nm or more | 96 | 72 | A | A | A | A | A |
| Example 26 | electrically conductive layer 2 | 120 | protective layer | adhesive film 2 | 0.28 | 20 | 1 | 300 nm or more | 96 | 72 | A | B | B | A | A |
| Example 27 | electrically conductive laver 2 | 120 | protective layer | adhesive film 1 | 0.15 | 20 | 39 | 300 nm or more | 96 | 72 | A | B | B | A | A |
| Example 28 | electrically conductive layer 2 | 120 | protective layer | adhesive film 2 | 0.28 | 20 | 39 | 300 nm or more | 96 | 72 | A | C | C | A | A |
| Example 29 | electrically conductive layer 2 | 140 | protective layer | adhesive film 1 | 0.15 | 20 | 1 | 300 nm or more | 96 | 72 | A | B | C | A | A |

[Table 4-1]

[Table 4-1]

[Table 4-1]

| | characteristics of film (X direction) | | | | | resin | | | number of layers | sheet | | heat treatment temperature (°C) | off-annealing temperature (°C) |
|---|---|---|---|---|---|---|---|---|---|---|---|---|---|
| | \|S(150)--S(100)\| (%) | \|S(120)--S(100)\| (%) | shrinkage onset temperature (°C) | average shrinkage rate between 100°C and 120°C (%) | absolute value of average rate of change of shrinkage rate between 120°C and 150°C (%/°C) | A layer | B layer | C layer | | \|S(150)--S(100)\| (%) | \|S(120)--S(100)\| (%) | | |
| Example 30 | 110 | 0.02 | 136 | 0.32 | 0.04 | resin 1 | resin 2 | - | 501 | 1.81 | 0.49 | 205 | 130 |

[Table 4-2]

[Table 4-2]

| | function layer of laminated structure body | | characteristics of laminated structure body | | | effect | | |
|---|---|---|---|---|---|---|---|---|
| | type of function layer | drying temperature for function layer formation (°C) | reflection range where reflectance is 30% or more | average reflectance between wavelength 850 nm and 1,200 nm (%) | visible light transmittance (%) | deformation of function layer | film quality | heat shielding property |
| Example 30 | hard coat | 110 | 300 nm or more | 95 | 80 | A | A | A |

INDUSTRIAL APPLICABILITY

The present invention provides a film that shows a high processability both before and after processing into laminated glass etc. The use of the film according to the present invention makes it possible to produce laminated glass having superior external appearance and aesthetic properties, and the laminated glass can be used suitably for windows etc. in automobile, buildings, etc.

**Claims**

1.   A film comprising at least one thermoplastic resin layer and satisfying the following relations in the X-direction:

$$0.50 \le |S(150) - S(100)|$$

and

$$0.00 \le |S(120) - S(100)| \le 0.40$$

wherein $S(T)$% shows the shrinkage rate at a temperature of T°C on a thermal shrinkage curve, and the X direction being determined by first measuring the $S(150)$ value in a randomly selected direction, then performing the measurement at other directions away from the initial direction in 5° increments up to 180° in a plane parallel to the film plane, and identifying the direction with the largest $S(150)$ value as the X direction.

2.   A film as set forth in claim 1, wherein the shrinkage onset temperature on the thermal shrinkage curve measured in the X direction is 110°C or more and 170°C or less.

3.   A film as set forth in claim 1, wherein, in the X direction, the average shrinkage rate on the thermal shrinkage curve between 100°C and 120°C is -0.40% or more and 0.50% or less and the absolute value of the average rate of change of the shrinkage rate between 120°C and 150°C is 0.04%/°C or more.

4.   A film as set forth in claim 1, having a structure in which 51 or more layers of thermoplastic resin layers are stacked.

5.   A film as set forth in claim 1, comprising an A1 layer and a B1 layer wherein the A1 layer and the B1 layer are two different types of thermoplastic resin layers having different primary components.

6.   A film as set forth in claim 1, comprising three types of thermoplastic resin layers having different primary components, each designated as the A2 layer, the B2 layer, and the C2 layer, respectively, wherein these A2 layers, B2 layers, and C2 layers are stacked in a regular manner.

7. A film as set forth in claim 1, wherein at least one of the thermoplastic resin layers is a polyester resin layer.

8. A method for producing a film as set forth in claim 1, comprising an off-annealing step in which a sheet that satisfies the relation of $0.50 \leq |S(150) - S(100)|$ is subjected to heat treatment at a temperature of 110°C or more and less than 140°C.

9. A method for producing a film as set forth in claim 8, wherein the sheet satisfies the relation of $0.40 < IS(120) - S(100)|$.

10. A laminated structure body comprising a film as set forth in claim 1 and a functional layer laid on at least one side thereof.

11. A laminated structure body as set forth in claim 10, wherein the functional layer is an electrically conductive layer.

12. A laminated structure body as set forth in claim 10, comprising a plurality of functional layers, at least one of which is a second film having an absolute value of shrinkage rate of 0.20% or less at 120°C.

13. A laminated structure body as set forth in claim 12, wherein the film and the second film are attached to each other in such a manner that the relation of $|\theta b - \theta f| \leq 30°$ is satisfied where $\theta b$ is the orientation angle of the film while $\theta f$ is the orientation angle of the second film.

14. A laminated structure body as set forth in claim 10, comprising functional layers on both sides surfaces wherein one of the functional layers is an electrically conductive layer while the other functional layer is the second film having an absolute value of shrinkage rate of 0.20% or less at 120°C.

15. A laminated structure body as set forth in claim 10, wherein a reflection profile measured from at least one surface includes at least one reflection band in which a reflectance of 30% or more continues over a wavelength range of 20 nm or more.

16. A laminated structure body as set forth in claim 15, wherein the reflection band exists in a wavelength range from 850 nm to 1,200 nm.

17. A laminated structure body as set forth in claim 10, wherein the visible light transmittance is 70% or more.

18. A method for producing a laminated structure body as set forth in claim 11, comprising a step for conducting heat treatment at a temperature of 100°C or more and less than 130°C in producing the electrically conductive layer.

19. Laminated glass comprising a glass layer 1, an interlayer 2, a laminated structure body as set forth in claim 11, an interlayer 2, and a glass layer 2 disposed in this order.

20. Laminated glass as set forth in claim 19, wherein the glass layer 1 is positioned on the side where sunlight enters and the electrically conductive layer of the laminated structure body faces the interlayer 1.

21. An automobile comprising laminated glass as set forth in claim 19 and performing an optical or thermal function when electricity is supplied to the electrically conductive layer of the laminated glass.

## INTERNATIONAL SEARCH REPORT

| International application No. |
|---|
| **PCT/JP2023/032980** |

| A. | CLASSIFICATION OF SUBJECT MATTER |
|---|---|

*C08J 5/18*(2006.01)i; *B29D 7/01*(2006.01)i; *B32B 7/028*(2019.01)i; *B32B 27/36*(2006.01)i; *C03C 27/12*(2006.01)i
FI:    C08J5/18 CFD; B32B7/028; B32B27/36; B29D7/01; C03C27/12 F; C03C27/12 K

According to International Patent Classification (IPC) or to both national classification and IPC

| B. | FIELDS SEARCHED |
|---|---|

Minimum documentation searched (classification system followed by classification symbols)

C08J5/00-5/02; C08J5/12-5/22; B29D1/00-29/10; B32B1/00-43/00; C03C27/00-29/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2012-81748 A (TORAY INDUSTRIES, INC.) 26 April 2012 (2012-04-26) claims, paragraphs [0024], [0046], [0048], table 1, fig. 1, example 5, comparative example 1 | 1-2, 4-5, 7, 10-12, 14-21 |
| Y | | 6 |
| A | | 3, 8-9, 13 |
| Y | JP 2017-132255 A (TORAY INDUSTRIES, INC.) 03 August 2017 (2017-08-03) paragraph [0039] | 6 |
| A | JP 2014-180844 A (TORAY INDUSTRIES, INC.) 29 September 2014 (2014-09-29) entire text | 1-21 |
| A | JP 2016-64974 A (TORAY INDUSTRIES, INC.) 28 April 2016 (2016-04-28) entire text | 1-21 |
| A | JP 2005-186613 A (TORAY INDUSTRIES, INC.) 14 July 2005 (2005-07-14) entire text | 1-21 |

| ☑ | Further documents are listed in the continuation of Box C. | ☑ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 November 2023** | **05 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2023/032980** |

**C.     DOCUMENTS CONSIDERED TO BE RELEVANT**

| Category* | Citation of document, with indication, where appropriate, of the relevant passages | Relevant to claim No. |
| --- | --- | --- |
| A | JP 2017-206012 A (TORAY INDUSTRIES, INC.) 24 November 2017 (2017-11-24)<br>entire text | 1-21 |

Form PCT/ISA/210 (second sheet) (January 2015)

## INTERNATIONAL SEARCH REPORT
### Information on patent family members

International application No.

**PCT/JP2023/032980**

| Patent document cited in search report | | | Publication date (day/month/year) | Patent family member(s) | Publication date (day/month/year) |
|---|---|---|---|---|---|
| JP | 2012-81748 | A | 26 April 2012 | (Family: none) | |
| JP | 2017-132255 | A | 03 August 2017 | (Family: none) | |
| JP | 2014-180844 | A | 29 September 2014 | (Family: none) | |
| JP | 2016-64974 | A | 28 April 2016 | (Family: none) | |
| JP | 2005-186613 | A | 14 July 2005 | (Family: none) | |
| JP | 2017-206012 | A | 24 November 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013137288 A
- JP 2012030563 A